(19) Europäisches Patentamt
European Patent Office
Office européen des brevets

(11) Veröffentlichungsnummer: **0 271 656**
**B1**

(12) **EUROPÄISCHE PATENTSCHRIFT**

(45) Veröffentlichungstag der Patentschrift: **01.08.90**

(51) Int. Cl.⁵: **C09B 62/002,** C09B 19/02, C07C 309/14, D06P 1/00

(21) Anmeldenummer: **87114489.5**

(22) Anmeldetag: **05.10.87**

(54) **Aminoalkoxy-triphendioxazin-Reaktivfarbstoffe.**

(30) Priorität: **17.10.86 DE 3635312**

(43) Veröffentlichungstag der Anmeldung: **22.06.88 Patentblatt 88/25**

(45) Bekanntmachung des Hinweises auf die Patenterteilung: **01.08.90 Patentblatt 90/31**

(84) Benannte Vertragsstaaten: **CH DE FR GB LI**

(56) Entgegenhaltungen:
**EP-A- 0 144 580**
**EP-A- 0 158 857**
**DE-A- 2 503 611**
**FR-A- 2 168 459**
**GB-A- 769 706**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk(DE)**

(72) Erfinder: **Harms, Wolfgang, Dr., Walter-Flex-Strasse 21, D-5090 Leverkusen(DE)**

EP 0 271 656 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind Farbstoffe der Formel

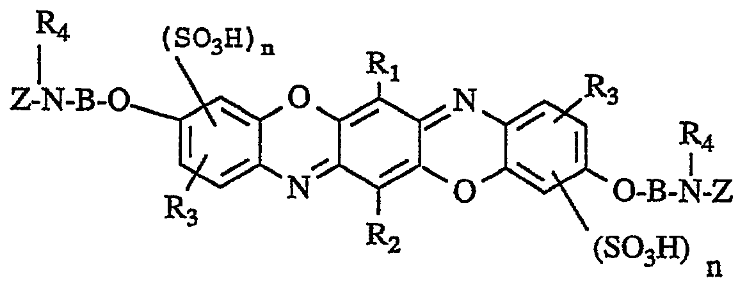

(I)

worin

$R_1$, $R_2$ = H, Cl, Br, ggf. substituiertes $C_1$–$C_4$-Alkyl, ggf. substituiertes $C_{1-4}$-Alkoxy, ggf. substituiertes Phenoxy,

$R_3$ = H, Cl, Br, ggf. substituiertes $C_{1-4}$-Alkyl, ggf. substituiertes $C_{1-4}$-Alkoxy,

$R_4$ = H, ggf. substitueirtes $C_{1-4}$-Alkyl, ggf. substituiertes Aralkyl, ggf. substituiertes Phenyl,

B = ggf. durch Heteroatome unterbrochenes, ggf. substituiertes aliphatisches Brückenglied mit 2–6 C-Atomen.

Z = H oder faserreaktiver Rest

n = 0 oder 1.

Als Substituenten für die oben genannten Alkyl- und Phenylreste kommen insbesondere in Frage:

$SO_3H$, $OSO_3H$, OH, COOH, $CONH_2$, CN, $S_2O_3H$, $OPO_3H_2$, $PO_3H_2$, Halogen.

Geeignete Brückenglieder B sind beispielsweise aliphatische insbesondere solche mit 2–6 C-Atomen, die gegebenenfalls durch Heteroatome wie O, NH, S, N–$C_1$–$C_4$-Alkyl unterbrochen oder die gegebenenfalls substituiert sind, beispielsweise durch OH, $OSO_3H$.

Geeignete aliphatische Brückenglieder sind beispielsweise:

$C_2$–$C_6$-Alkylen wie Ethylen, 1,3- und 1,2-Propylen, 1- und 2-Phenylpropylen, 2-Hydroxypropylen, 1,4-, 1,3-, 2,3- Butylen, 1,5-Pentylen, 1,6- und 2,5-Hexylen, $-(CH_2-CH_2-O)_n-CH_2-CH_2-$ mit n = 1–3, $-CH_2-CH_2-S-CH_2-CH_2-$, $-CH_2-CH_2-NH-CH_2-CH_2-$,

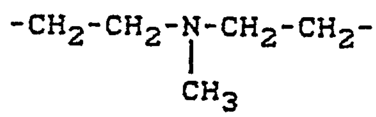

Geeignete faserreaktive Reste, d.h. soche, die mit den OH- oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin- und Phenanthridin-Ring-System.

Unter den reaktiven Substituenten am Heterocyclus sind beispielsweise zu erwähnen Halogen (Cl, Br oder F), Ammonium einschließlich Hydrazinium, Sulfonium, Sulfonyl, Azido(-$N_3$), Rhodanido, Thio, Thiolether, Oxiether, Sulfinsäure und Sulfonsäure.

Im einzelnen sind beispielsweise zu nennen:

2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugt Substituenten für Alkyl, Hydroxy, Cyan, $C_1$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen oder Acylamino.

Im einzelnen seien folgende Reste genannt:

2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-Di-(carboxymethylamino)-4- fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(x-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2′,5′-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2′-Methyl-4′-sulfophenyl)-amino-4-fluor-triazinyl-6, 2-(2′-Methyl-5′-sulfophenyl)-amino-4-fluor-triazinyl-6, 2-(2′-Chlor-4′-sulfophenyl)-amino-4-fluor-triazinyl-6, 2-(2′-Chlor-5′-sulfophenyl)-amino-4-fluor-triazinyl-6, 2-(2′-Methoxy-4′-sulfophenyl)-amino-4-fluor-triazinyl-6, 2-(o-, m-, p-Carboxyphenyl)-amino-4-fluor-triazinyl-6, 2-(2′,4′-Disulfophenyl)-amino-4-fluor-triazinyl-6, 2-(3′,5′-Disulfophenyl)-amino-4-fluor-triazinyl-6, 2-(2′-Carboxy-4′-sulfophenyl)-amino-4-fluor-triazinyl-6, 2-(2′-Carboxy-5′-sulfophenyl)-amino-4-fluor-triazinyl-6, 2-(6′-Sulfonaphthyl-(2′))-amino-4-fluor-triazinyl-6, 2-(4′,8′-Disulfonaphthyl-(2′))-amino-4-fluor-triazinyl-6, 2-(6′,8′-Disulfonaphthyl-(2′))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-isoPropylphenyl)-amino-4-fluor-triazinyl-6, 2-Morpholino-4-fluor-triazinyl-6, 2-Piperidino-4-fluor-triazinyl-6, 2-(4′,6′,8′-Trisulfonaphthyl-(2′))-4-fluor-triazinyl-6, 2-(3′,6′,8′-Trisulfonaphthyl-(2′))-4-fluor-triazinyl-6, 2- (3′,6′,-Disulfonaphthyl-(1′))-4-fluor-triazinyl-6, N-Methyl-N(2,4-dichlortriazinyl-6)-carbamyl, N-methyl-N-(2-methylamino-4-chlortriazinyl-6)-carbamyl, N-methyl-N-(2-dimethylamino-4-chlortriazinyl-6)-carbamyl, N-methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m- oder p-Sulfophenoxy)-4-fluor-triazinyl-6, 2-(o-, m- oder p-Methyl- oder -Methoxy-phenoxy)-4-fluor-triazinyl-6, 2-β-Hydroxyethylmercapto-4-fluor-triazinyl-6, 2-Phenylmercapto-4-fluor-triazinyl-6, 2-(4′-Methylphenyl)-mercapto-4-fluortriazinyl, 2-(2′,4′-Dinitrophenyl)-mercapto-4-fluor-triazinyl-6, 2-Methyl-4-fluor-triazinyl-6, 2-Phenyl-4-fluor-triazinyl-6, sowie die entsprechende 4-Chlor- bzw. 4-Brom-Triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin oder Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder Halogendiazinylrest verknüpft sein. Beispiele für derartige Reste sind die folgenden:

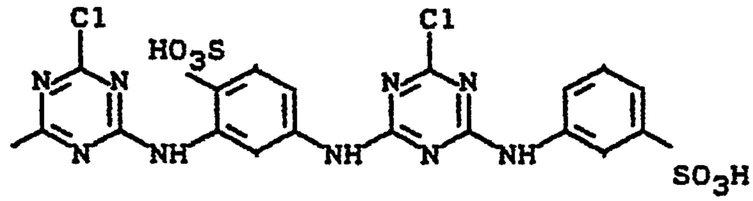

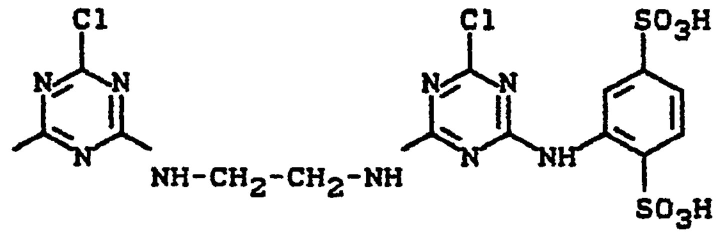

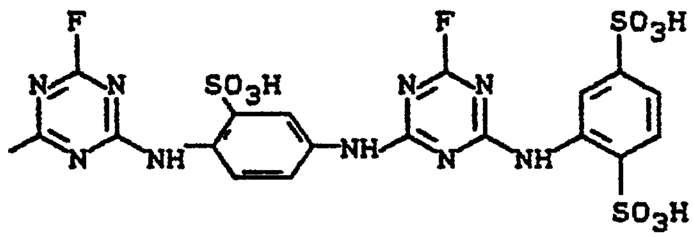

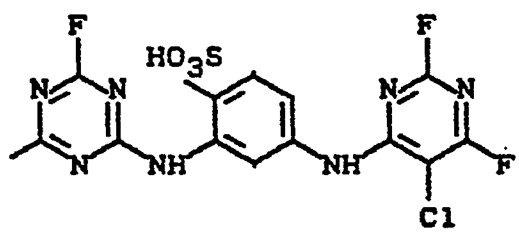

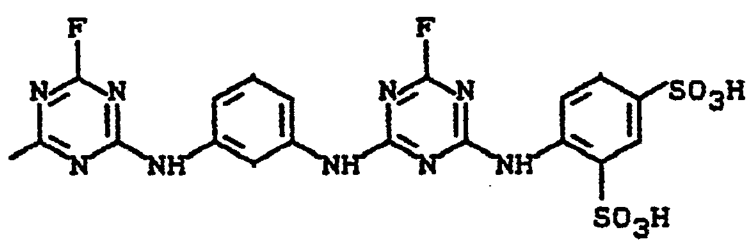

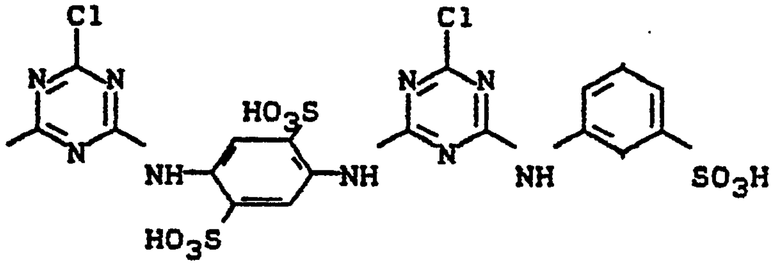

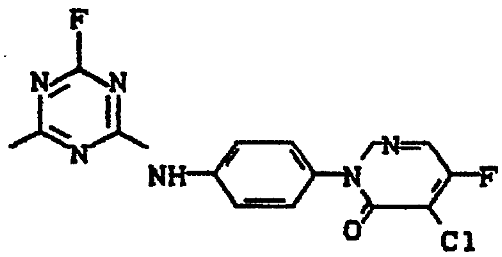

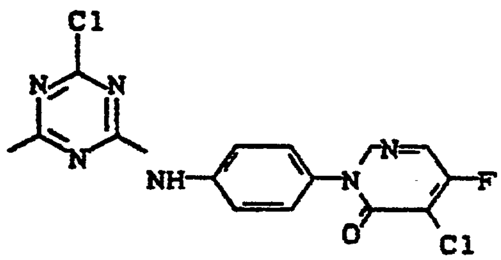

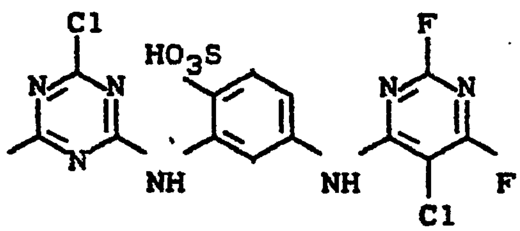

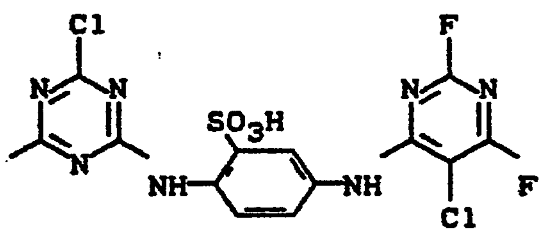

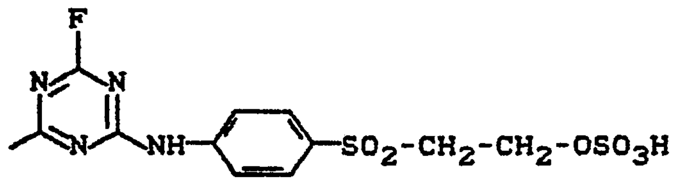

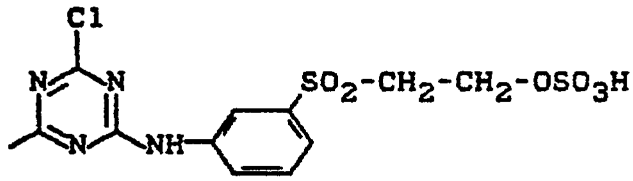

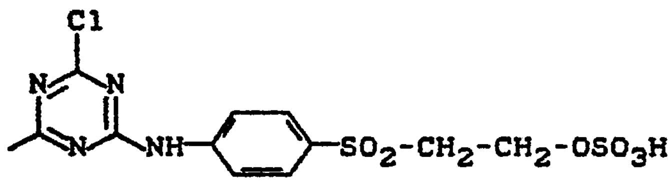

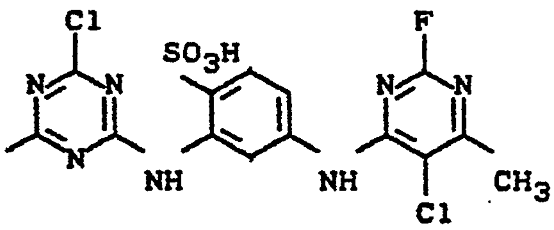

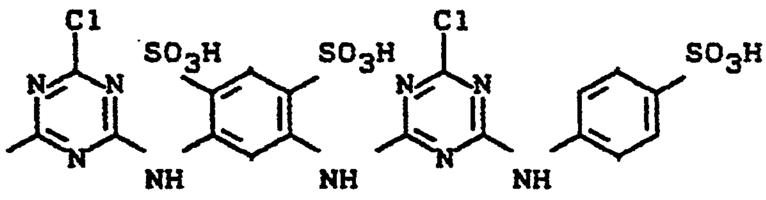

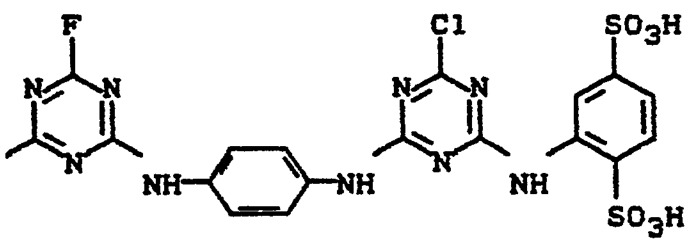

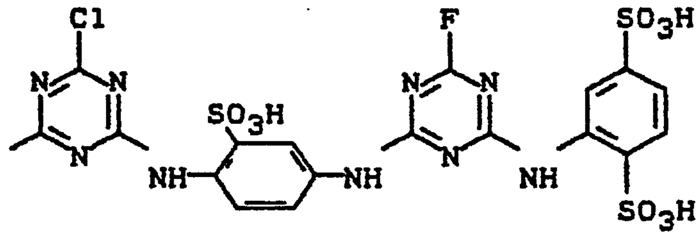

Weiter können die Halogentriazinylreste auch mit einem zur Bildung eines Vinylsulfonrestes befähigten Aminrest verknüpft sein, wie zum Beispiel 2-(2'-, 3'- oder 4'-(β-Sulfatoethylsulfonyl)-phenylamino-4-fluor-triazinyl-6, 2-(2'-, 3'- oder 4'-(β-Thiosulfatoethylsulfonyl)-phenylamino-4-fluor-triazinyl-6, 2-(2'-, 3'-, 4'-(β-Phosphatoethyl-sulfonyl)-phenylamino-4-fluor-triazinyl-6, 2-(2'-, 3'-, 4'-β-Acetoxy-ethylsulfonyl)-phenylamino)-4-fluor-triazinyl-6, 2-(2'-, 3'-, 4'-(β-Chlorethylsulfonyl)-phenylamino)-4-fluor-triazinyl-6, 2-(2'-, 3'-, 4'-Vinylsulfonyl-phenylamino)-4-fluor-triazinyl-6, 2-(2-(β-Sulfatoethylsulfonyl)-ethylamino)-4-fluor-triazinyl-6 sowie die entsprechenden 2-Substituierten-4-chlor-triazinyl-6-reste.

Mono-, Di- oder Trihalogenpyrimidinylreste, wie 2,4-Di-chlorpyrimidinyl-6-, 2,3,5-Trichlorpryrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-me thyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4', 5'-Dichlorpyridazon-6'-yl-1')-phenylsulfonyl- oder -carbonyl-, β-(4', 5'-Dichlorpyridazon-6'-yl-1')-ethylcarbonyl, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5- brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2-Fluor-4-dichlormethyl-5-chlorpyrimidin-6-yl, 2-Fluor-5-chlorpyrimidin-4-yl; 2-Methyl-4-fluor-5-methylsulfonyl-pyrimidinyl-6; 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethylpyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyri midin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methyl-sulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoethylsulfonyl-6-methyl-pyrimidinyl-4-, 2-Methylsulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4-oder -5-carbonyl, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl-oder -carbonyl-; 2-Chlorbenzthiazol-5- oder -6-carbonyl-oder -5- oder -6-sulfonyl-, 2-Arylsulfonyl- oder Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6-sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl- Derivate, 2-Chlorbenzoxazol-5- oder -6-carbonyl- oder -sulfonyl-, 2-Chlorbenzimidazol-5-oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl.

Desweiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, β-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-, β-(2,2,3,3-Tetrafluorcyclobutyl-2)-aryloxy-, α- oder β-Bromacryloyl-, α- oder β-Alkyl- oder Arylsulfoacryloyl-Gruppe, wie α- oder β-Methylsulfonylacryloyl, Chloracetyl, Vinylsulfonyl, $-SO_2CH_2CH_2Z$ worin Z = alkalisch abspaltbare Gruppe, insbesondere $-OSO_3H$, $-OCOCH_3$, $-SSO_3H$, $-OPO_3H_2$, $-OCOC_6H_5$, Di-$C_1$-$C_4$-Alkylamino, quartäres Ammonium, insbesondere $-N^{\oplus}(C_1\text{-}C_4\text{-Alkyl})_3X^{\ominus}$,

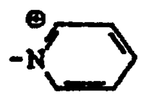 $X^{\ominus}$ oder 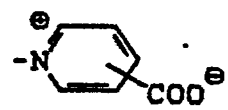 mit

mit

X = Anion, bspw. $-OSO_3H$, $-OPO_3H_2$, -Cl, -Br, -F, -SCN, -OCN, $-OSO_3CH_3$, $-OSO_2C_6H_5$, $OOC-CH_3$.

Bevorzugt unter den Farbstoffen der Formel (I) sind solche der Formel

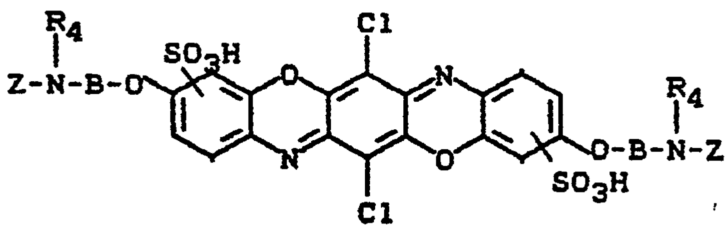 (II)

Weiterhin bevorzugt Farbstoffe sind solche der Formel

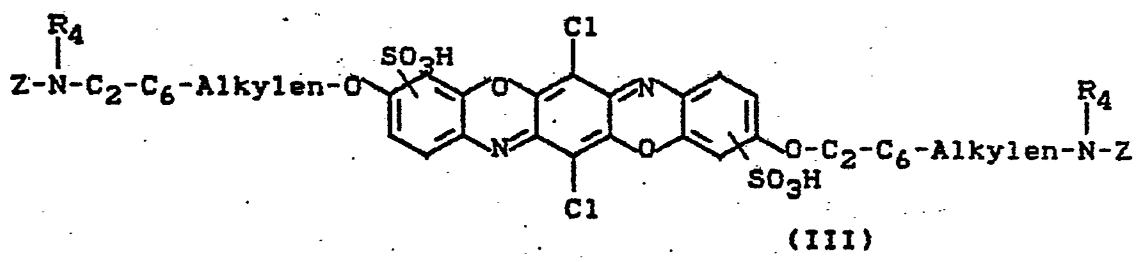

(III)

insbesondere solche der Formel

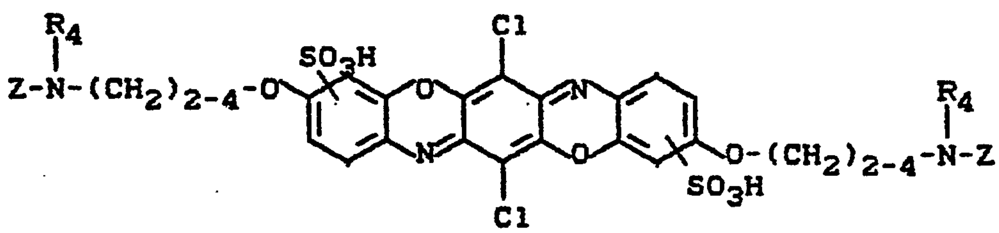

(IV)

sowie solche der Formel

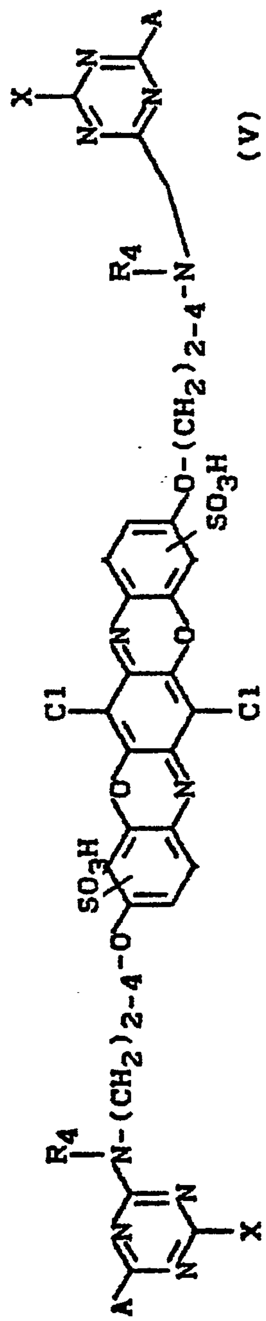

(V)

worin
X = F, Cl und
A = Rest eines Aminobenzols oder Aminonaphthalins.

Die Herstellung der Farbstoffe (I) mit Z=faserreaktiver Rest erfolgt besipielsweise durch Reaktion der entsprechenden Farbstoffe (I) mit Z=H (=VI) mit 1-2 Mol einer Reaktivkomponente
Z-Hal(VII)
worin
Hal = F, Cl oder Br.

Geeignet Reaktivkomponenten (VII) sind dabei insbesondere die den oben angegebenen Resten zugrunde liegenden Halogenverbindungen.

Die Kondensation wird entweder in wäßrigem oder wäßrig organischem Medium in Abhängigkeit von der eingesetzten Reaktivkomponente bei Temperaturen von 0-80° C und pH-Werten von 5-11 in Gegenwart alkalischer Kondensationsmittel wie wäßriger Alkalihyrogencarbonat-, Alkalicarbonat-, Alkalihydroxid, Dialkalihydrogenphosphat- oder Trialkaliphosphat-Lösung durchgeführt oder in aprotischen organischen Lösungsmitteln wie Toluol, Halogenbenzolen, Nitrobenzol, Dimethylformamid, N-Methylpyrrolidon, Tetramethylensulfon, Dimethylsulfoxid, Aceton, Methylethylketon gegebenenfalls in Gegenwart aprotischer organischer Basen wie Trialkylamin, N,N-Dialkylanilin, Pyridin oder Alkylpyridinen bei Temperaturen von 0 -80° C vollzogen.

Bei Kondensation mit weniger als 2 Mol (VII) entstehen Gemische aus Mono- und Bis-kondensationsprodukt.

Die Herstellung von Verbindungen der Formel (VI) kann erfolgen nach an sich bekannten Methoden durch Kondensation von 1,4-Benzochinonen der Formel

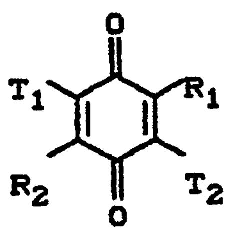

(VIII)

worin
$T_1$, $T_2$ Wasserstoff, Cl, Br, O-Alkyl oder O-Aryl bedeuten,
mit Aminen der Formel

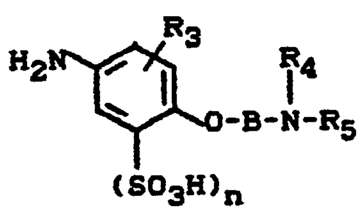

(IX)

worin
$R_5$ = H, Alkylcarbonyl oder Phenylcarbonyl
n = 0 oder 1
oder worin

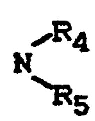 den Rest 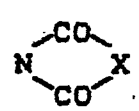.

mit
X = $C_2$-$C_4$-Alkylen oder 1,2-Phenylen bedeutet,
zu Verbindungen der Formel

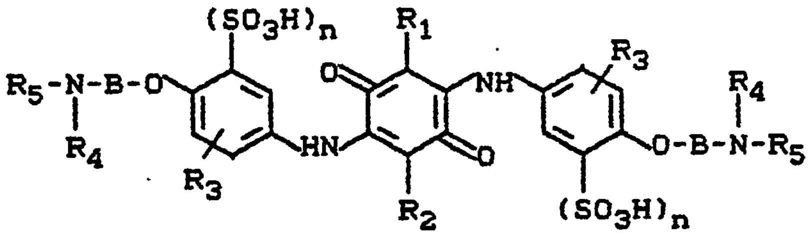

(X)

und nachfolgenden Ringschluß der Dianilide (X) zu den Triphendioxazin-Verbindungen der Formel (VI). Auch im Zuge dieser letzten Operation können gegebenenfalls Sulfonsäuregruppen eingeführt werden. Weiterhin kann zusätzlich gegebenenfalls, wenn nicht vorher erfolgt, eine Umwandlung der

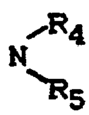 -Funktion in 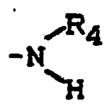 oder

oder $-NH_2$ durch Verseifung vorgenommen werden.

Je nach den beim Ringschluß angewandten Reaktionsbedingungen können die Sulfonsäuregruppen in den Benzringen der Dioxazine (VI) entweder in den o- oder in den p-Stellungen zu den Ringsauerstoffatomen des Dioxazin-Systems auftreten.

Die Kondensation der Benzochinone der Formel (VIII) mit den Aminen (IX) erfolgt am besten in wäßrigem oder wäßrig-organischem Medium unter Zugabe alkalischer Kondensationsmittel bei pH-Werten von 3-11, vorzugsweise 4-8, und Temperaturen von 20-90° C, vorzugsweise 40-70° C - oder in gepufferten Lösungen, die obige alkalische Kondensationsmittel enthalten. Man kann auch in rein organischem Milieu unter Zusatz säurebindender Mittel arbeiten.

Alkalische Kondensationsmittel sind beispielsweise Natriumhydrogencarbonat, Natriumcarbonat, Natrium- oder Kaliumacetat, Natronlauge, Kalilauge, Natriumphosphate, Natriumborat.

Im allgemeinen fallen die Kondensationsprodukte der Formel (X) als schwerlösliche, braune Produkte aus.

Eine Variante zur Herstellung von Verbindungen der Formel (X) besteht in der Addition von Aminen (IX) an 1,4-Benzochinone der Formel

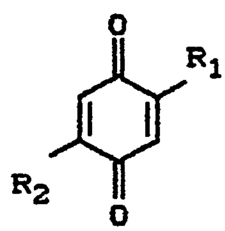

(XI)

worin

$R_1$ und $R_2$ die oben angegebene Bedeutung haben,

und Oxydation der primär entstehenden Addukte.

Der Ringschluß der Chinonkondensationsprodukte (X) zu den Dioxazinen (VI) kann nach an sich bekannten Methoden, wie sie in den Deutschen Offenlegungsschriften 2 122 262, 2 124 080, 2 302 383, 2 344 781, 2 503 611, 2 823 828 und in der Britischen Patentschrift 2 019 872 beschrieben sind, insbesondere in konzentrierter Schwefelsäure und vor allem in Oleum mit $SO_3$-Gehalten von 1-50 % bei Temperaturen von 10-80° C gegebenenfalls mit Zusatz von Oxidationsmitteln wie Kalium- oder Ammoniumperoxidisulfat, Braunstein oder organischen Peroxiden vorgenommen werden.

Amine (IX) mit B=Alkylen vorzugsweise $C_2$-$C_6$-Alkylen und n = 1 sind neu und ebenfalls Gegenstand der Erfindung und lassen sich beispielsweise folgendermaßen herstellen:

Nitroverbindungen der Formeln

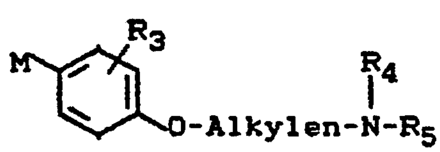

(XII)

oder

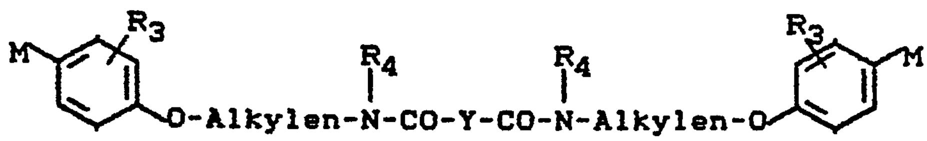

(XIIa)

mit
Y = direkte Bindung, $C_2$-$C_4$-Alkylen oder 1,3- bzw. 1,4-Phenylen
und
M = $NO_2$
werden in bekannter Weise zu den entsprechenden Aminen XIII bzw. XV mit M=$NH_2$ reduziert und anschließend gegebenenfalls sulfoniert (in o-Stellung zum -o-Substituenten) und die Acylaminogruppe verseift.

Alternativ kann die Einführung von Sulfogruppen auch auf der Stufe der Verfindungen (VI) bzw. der Stufe (X) erfolgen, ebenso die Verseifung.

Die Herstellung der Verbindungen (XII) kann beispielsweise folgendermaßen erfolgen:

1. 4-Nitrochlorbenzol wird mit 2-Amino- bzw. 2-Alkylaminoethanol in Dimethylsulfoxid/Natriumhydrid bei etwa 40° C umgesetzt (vgl. Knipe et al. Journal of the Chemical Soc., Perkin trans I 1977, 581-583; Synthesis 1976, 606-607).

2. Umsetzung von ω-(4-Nitrophenoxy)-alkanolen mit Toluolsulfochorid zu den entsprechenden Estern, Austausch des Toluolsulfonatrestes gegen den Phthalimidrest mit Phthalimidkalium und folgende saure Verseifung (vgl. J. of Organic Chemistry, 1985, 4449-4504).

3. Umsetzung von ω-(4-Nitrophenoxy)-alkylbromiden mit Phthalimidkalium bzw. 4-Nitrophenol mit ω-Phthalimido-alkylbromiden und folgende Abspaltung des Phthalimidrestes mit Hydrazin (vgl. Britische Patentschrift 769 706 und Journal of the Chemical Society (London) 1959, 3886) bzw. Umsetzung von ω-(4-Nitrophenoxy)-alkylbromiden mit Hexamethylentetramin und folgende saure hydrolytische Spaltung des quartären Salzes (vgl. Journal of Medicinal Chemistry, 12, 214-216 (1969)).

Ein wesentlich einfacheres Verfahren zur Herstellung der Verbindungen (XII) bzw. (XIIa) mit B=Alkylen, das ebenfalls Gegenstand der vorliegenden Erfindung ist, verläuft folgendermaßen.

Nitrohalogenbenzole der Formel

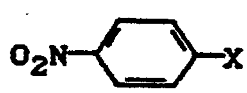

(XVII)

mit
X = F, Cl, Br
werden mit Acylaminoalkanolen der Formel

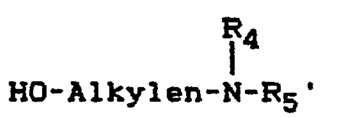

(XVIII)

bzw.

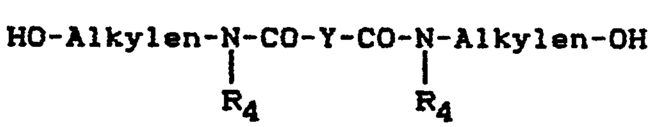

(XIX)

worin
$R^{5'}$ = Alkylcarbonyl oder Arylcarbonyl und worin

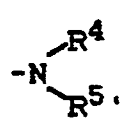 auch für 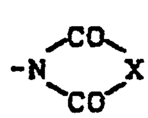

mit
X = $C_2$-$C_4$-Alkylen bzw. 1,2-Phenylen stehen kann,
in Gegenwart starker Basen wie Alkalihydroxid oder organischen Basen und gegebenenfalls üblichen Phasentransferkatalysatoren bei Temperaturen von etwa 20 bis 100° umgesetzt.

Als Reaktionsmedium kommen vorzugsweise dipolare aprotische Lösungsmittel (in Kombination mit festen Alkalihydroxid bzw. organischen Basen) oder mit Wasser nicht mischbare organische Lösungsmittel (in Kombination mit wäßrigen Alkalihydroxid und Transferkatalystoren) zur Anwendung.

Geeignete dipolare aprotische Lösungsmittel sind beispielsweise Acetonitril, Dimethylsulfoxid, Tetramethylensulfon, Säureamide wie Dimethylformlmid, Dimethylacetamid, N-Methylpyrrolidon.

Geeignete organische Lösungsmittel sind beispielsweise Aromaten wie Toluol, Xylole, Benzol, Chlorbenzole, Nitrobenzol, Anisol, Dimethylanilin, aliphatische Chlorkohlenwasserstoffe.

Geeignete organische Basen sind beispielsweise Trialkylamine wie Trimethylamin, Tributylamin, N,N-Dimethylcyclohexylamin, N-Alkylmorpholine, Diazabicyclooctan.

Geeignet Transferkatalysatoren sind beispielsweise Tetraalkylammoniumsalze wie Tetra-butylammoniumchlorid, oder -bromid, Methyl-tri-octylammoniumchlorid, Benzyl-triethylammoniumchlorid oder -bromid, Benzyldodecyl-dimethylammoniumchlorid, Methyl-oder Ethyltri-butylammoniumbromid, Tetra-n-hexylammoniumbromid, n-Hexadecyl-trimethylammoniumbromid.

Geeignete Acylaminoalkanole der Formeln (XVIII) und (XIX) sind beispielsweise folgende:
N-(2-Hydroxyethyl)-formamid, -acetamid, -propionamid, -benzamid, -4-chlorbenzamid oder -phthalimid, N-(3-Hydroxy- oder 2-hydroxypropyl)-formamid, -acetamid, -propionamid, -butyramid, -benzamid oder -phthalimid, N-(4-, 3- oder 2-Hydroxybutyl)-acetamid oder -benzamid, N-(5-hydroxypentyl)-acetamid oder -benzamid, N-(6-Hydroxyhexyl)-formamid, -acetamid, -propionamid, -benzamid oder -phthalimid, N-Methyl-N-(2-hydroxyethyl)-acetamid, -propionamid oder -benzamid, N-Ethyl-N-(2-hydroxyethyl)-acetamid oder -benzamid, N,N-Bis-(2-hydroxyethyl)-acetamid oder -benzamid, N-Phenyl-N-(2-hydroxyethyl)-acetamid oder -benzamid, N-(1-Hydroxy-2-propyl)-benzamid, N-Cyclohexyl-N-(2-hydroxyethyl)-acetamid, N-Ethyl-N-(3-hydroxypropyl)-formamid oder -acetamid, N-(2-Hydroxy-1,1-dimethylethyl)-acetamid oder -benzamid, N,N'-Bis-(2-hydroxyethyl- oder 2- oder 3-hydroxypropyl- oder 2-, 3- oder 4-hydroxybutyl- oder 5-hydroxypentyl- oder 6-hydroxyhexyl)-oxalsäurediamid, -malonsäurediamid oder -bernsteinsäurediamid oder -terephthalsäurediamid oder -isophthalsäurediamid, N-(2-Hydroxyethyl-, 2- oder 3-Hydroxypropyl, 2-, 3- oder 4-Hydroxybutyl)-methylurethan, -ethylurethan oder -phenylurethan, N,N-Bis(2-hydroxyethyl)-harnstoff, N,N'-Bis(2- oder 3-hydroxypropyl)-harnstoff, N-(2- oder 3-Hydroxpropyl)-chloracetamid, N-(2-Hydroxyethyl)-acrylamid, N-(2-Hydroxyethyl) -methacrylamid.

Die erfindungsgemäß hergestellten Verbindungen (XII) und (XIIa) werden anschließend zu den Aminen (XIII) und (XV) reduziert, und anschließend in beliebiger Reihenfolge sulfoniert und die Acylaminogruppe verseift zu den Verbindungen der Formel

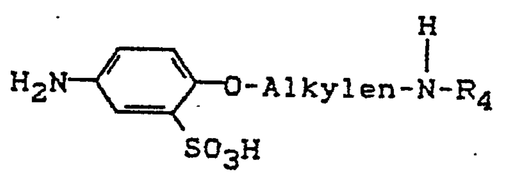

(XX)

Bei Verwendung sulfogruppenfreier Amine (IX) werden Sulfogruppen gegebenenfalls beim Ringschluß im Oleum oder Monohydrat zum Tripendioxazin eingeführt.

Die neuen Farbstoffe sind wertvolle Produkte, die sich durch hohe Farbstärken auszeichnen. Sie eignen sich in dispergierter oder gelöster Form für die verschiedensten Anwendungszwecke.

Als wasserlösliche Verbindungen finden sie bevorzugtes Interesse für das Färben hydroxyl- und amidgruppenhaltiger Textilmaterialien, insbesondere von Materialien aus nativer und regenerierter Cellulose sowie synthetischen Polyamid- und Polyurethanfasern, Wolle und Seide.

Als wasserlösliche Reaktivfarbstoffe werden die genannten Materialien nach den für Reaktivfarbstoff allgemein üblichen Verfahren gefärbt oder bedruckt. Man erhält dann licht- und naßechte rote Färbungen und Drucke.

Bei Temperaturangaben in den Beispielen handelt es sich um °C. Die Formeln der wasserlöslichen Farbstoffe in der Beschreibung und in den Beispielen sind die der freien Säuren. Die Farbstoffe werden in der Regel in Form ihrer Alkalisalze, insbesondere der Lithium-, Natrium- oder Kaliumsalze, isoliert und angewandt.

Im nächstliegenden Stand der Technik, der FR-A 2 168 459 werden Triphendioxazin-Farbstoffe des hier beanspruchten Typs beschrieben, bei denen die Reaktivgruppe über einen Aminophenoxy-alkoxy-Rest an den Chromphor gebunden ist.

Beispiel 1

6,5 g 2-Aminobenzolsulfonsäure werden in 80 ml Wasser bei pH 6-7 gelöst. Man stellt den pH-Wert auf 5,0, läßt bei 0-5° C 3,7 ml Cyanurfluorid in 5 Minuten zutropfen und hält den pH-Wert mit 5 %iger Sodalösung auf 4,5-4,7, wobei eine teilweise Ausfällung des Kondensationsproduktes auftritt. Zur Beendigung der Kondensation rührt man den Ansatz noch 15-20 Minuten unter den obigen Bedingungen nach.

7,7 g einer Aminoalkoxytriphendioxazin-Komponente der Formel (Herstellung siehe Beispiel 2)

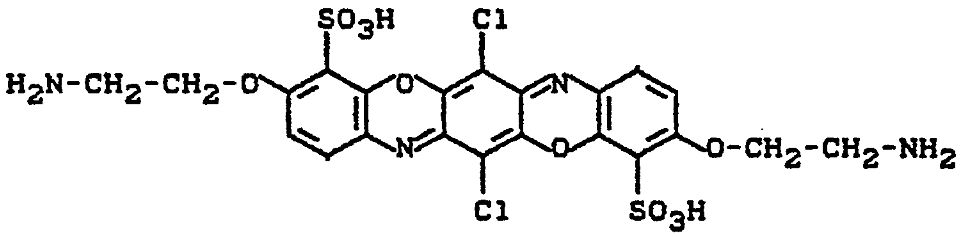

werden in 155 ml Wasser suspendiert und unmittelbar vor der Umsetzung mit 15,4 ml 2n Natronlauge bei pH 12 gelöst.

Man trägt nun die Lösung der Farbkomponente bei 0-5° C in die Suspension der oben hergestellten Reaktivkomponente möglichst zügig so ein, daß sich ein pH-Wert von 8,5-9,0 einstellt und hält diesen pH-Wert weiterhin durch Zutropfen von 2n Natronlauge im Reaktionsgemisch aufrecht.

Man rührt noch einige Stunden bei 0-5° C unter ständiger pH-Kontrolle nach und läßt dann die Temperatur unter weiterer pH-Kontrolle und Natronlaugezugabe über Nacht auf 20° C ansteigen. Nach Einstellen eines pH-Wertes von 7,5-8,0 wird der Farbstoff mit etwa 50 g Natriumchlorid ausgesalzen, die Fällung abgesaugt und der Filterkuchen mit 300 ml 15 %iger Natriumchlorid-Lösung gewaschen.

Der Filterkuchen wird nach Zusatz von Phosphatpuffern bei 50° C im Vakuumschrank getrocknet. Der erhaltene Farbstoff entspricht der Formel

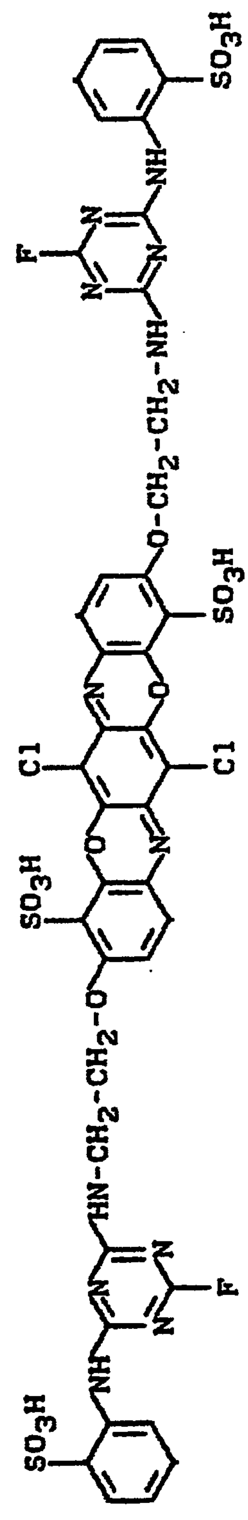

und färbt Cellulosefasern nach den für Reaktivfarbstoffe bekannten Färbeverfahren, in lichtechten, kräftigen, blaustichig roten Tönen.

$\lambda_{max}$ = 545 nm, 511 nm in Wasser

Beispiel 2

50,0 g 2-(4-Amino-2-sulfophenoxy)-ethylamin-hydrochlorid (Herstellung siehe Beispiele 3-6) werden in 500 ml Wasser suspendiert und durch Zusatz von 2n Natronlauge bis zum pH-Wert 5,5 in Lösung gebracht. Nach Zugabe von 80 ml Isopropanol trägt man 23,1 g 2,3,5,6-Tetrachlorchinon ein und erwärmt das Reaktionsgemisch auf 40°C. Man hält durch Zusatz von 2n Sodalösung dabei den pH-Wert ständig auf 5,5 und rührt zur Beendigung der Kondensation solange nach, bis der Sodaverbrauch völlig zum Stillstand kommt. Nach beendeter Umsetzung saugt man die braune Suspension des Kondensationsproduktes ab und wäscht den Filterkuchen mit 500 ml Wasser 500 ml Aceton. Nach Trocknung erhält man 52,8 g eines Produktes der Formel

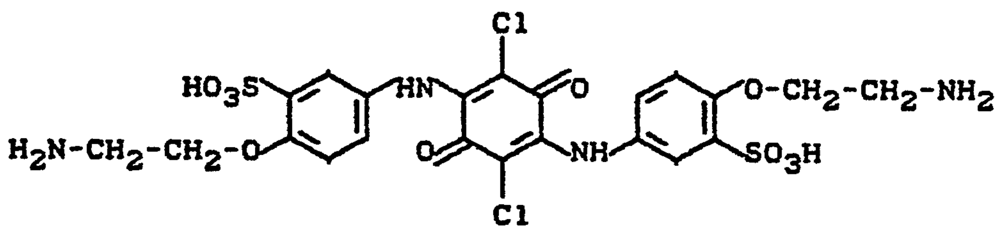

50,0 g des erhaltenen Kondensationsproduktes werden in 200 ml 20 %iges Oleum bei 0-10° allmählich innerhalb von 3 Stunden eingetragen, man steigert die Temperatur auf 25° und trägt nun 42,4 g Kaliumperoxodisulfat in etwa 1 Stunde ein, dabei wird die Temperatur auf 30-35° gehalten. Nach Eintragen des Oxidationsmittels wird das Reaktionsgemisch noch 30 Minuten auf 30° gehalten und anschließend in 2000 g Eis eingerührt. Die entstandene Suspension wird bei 20° abgesaugt und das Filtergut mit Wasser neutral bzw. sulfatfrei gewaschen.

Beispiel 3

90,4 g 2-Benzoylaminoethanol werden in 360 ml Acetonitril bei 15° gelöst. Man setzt zu der Lösung 30,1 g pulverisiertes Kaliumhydroxid und läßt zu der Suspension im Laufe von 20-30 Minuten 68,3 g 1-Fluor-4-nitrobenzol unter leichter Kühlung so zutropfen, daß die Temperatur bei 25-30° gehalten wird. Anschließend wird zur vollständigen Umsetzung 3 Stunden bei 30° nachgerührt. Der Ansatz wird mit 1700 ml Wasser verdünnt, die Fällung abgesaugt und der Filterkuchen mit 2 l Wasser, gewaschen. Erhalten werden 128,5 g Produkt der Formel

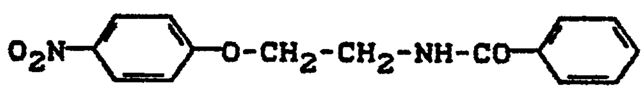

Schmelzpunkt 147-148° (gelbliche Platten aus Toluol)

| Elementaranalyse | | | | |
|---|---|---|---|---|
| berechnet | C 62,91% | H4,93% | N 9,79% | O22,37% |
| gefunden | C 63,10% | H5,05% | N 9,80% | O 22,00% |

$^1$H-NMR (DMSO)
δ = 3,66-3,72 ppm (2H,q),δ = 7,85 (2H, d),
δ = 4,28 ppm (2H, t),δ = 8,17 (2H, d),
δ = 7,16 ppm (2H, d),δ = 8,71 (1H, t),
δ = 7,4-7,55 ppm (3H, m)

128,5 g obiger Nitroalkoxyverbindung werden in 450 ml Methanol im Autoklaven nach Zusatz von 5 g Raney-Nickel unter einem Wasserstoffdruck von 50 bar bei 50-60° reduziert. Wenn die Wasserstoffaufnahme zum Stillstand gekommen ist, filtriert man nach Verdünnen mit 150 ml Methanol heiß von Raney-Nickel und dampft nach Waschen des Nickels mit Methanol die vereinigten Filtrate zur Trockene ein. Man erhält 113,5 g kristallisiertes N-[2-(4-Aminophenoxy)-ethyl]-benzamid
Schmelzpunkt 115-117° (aus Isopropanol oder Toluol)
$^1$H-NMR (DMSO)
δ = 3,57-3,64 (2H, q),δ = 6,68 (2H, d),
δ = 8,64 (1H, t),δ = 3,99 (2H, t),
δ = 7,42-7,51 (3H, m),δ = 6,51 (2H, d)
δ = 7,86 (2H, d)

113,5 g obiges Aminophenoxyethylbenzamid werden bei 15-20° in eine Mischung von 228 ml 20 %igem Oleum und 114 ml 96 %iger Schwefelsäure in 45 Minuten eingetragen; man steigert die Temperatur auf 25° und kontrolliert den Fortgang der Sulfonierung chromatographisch. Wenn die Umsetzung nach etwa 2 1/2 Stunden beendet ist, rührt man die Lösung in 2 kg Eis ein. Nach halbstündigem Nachrühren wird die kristallisierte Sulfonsäure abgesaugt und mit 1,5 l kalter 2 %iger Salzsäure sulfatfrei gewaschen. Sie kann bei 60° im Umluftschrank getrocknet werden und liefert dann 149,8 g Produkt. Zur Verseifung der Benzoylamino-Funktion wird das erhaltene Produkt in 1500 ml 10 %iger Salzsäure mehrere Stunden am Rückfluß gekocht, wobei allmählich Lösen der anfänglichen Suspension eintritt. Nach Kaltrühren kristallisiert das Produkt in schönen Nadeln aus. Man saugt sie ab und entfernt die mitausgefallene Benzoesäure durch Waschen des Filterkuchens mit Methanol oder Aceton. Man erhält nach Trocknen 96,0 g eines Hydrochlorids folgender Formel

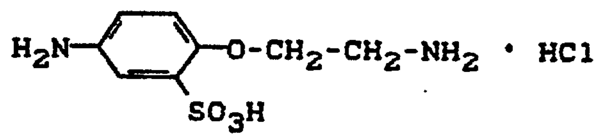

$^1$H-NMR
δ = 3,68 ppm (2H, t)
δ = 4,28 ppm (2H, t)
δ = 7,35 ppm (1H, d)
δ = 7,61-7,64 (1H, m)
δ = 7,86 ppm (1H, d)
berechnet 13,59 % HCl
gefunden 13,84 % HCl

Beispiel 4

45 g 2-Acetylaminoethanol werden in 170 ml Acetonitril gelöst, man setzt 24,0 g pulverisiertes Kaliumhydroxid zu, worauf sich ein kristalliner Niederschlag des Alkoholates bildet. Zu der Suspension läßt man bei 30° in 30 Minuten 54,2 g 4-Nitrofluorbenzol zutropfen und steigert anschließend die Temperatur auf 40°. Es bildet sich eine gelbe Lösung. Nach 5 Stunden bei 40° gießt man den Ansatz in 2 l Wasser ein, das zunächst ölig ausfallende Reaktionsprodukt erstarrt allmählich zu einer nadeligen Kristallmasse. Das Produkt wird abgesaugt, mit Wasser gewaschen und getrocknet. Es entspricht der Formel

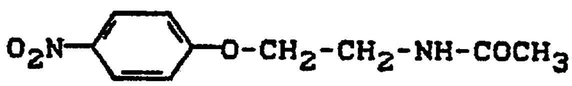

Fp. 120-122° (aus Toluol)
$^1$H-NMR ($CD_2Cl_2$)
δ = 1,96 ppm (3H, s),δ = 6,28 ppm (breit, 1H)
δ = 3,61-3,68 ppm (2H, q),δ = 6,90-6,95 ppm (2H, m)
δ = 4,16 ppm (2H, t),δ = 8,08-8,14 ppm (2H, m)

55 g obiger Nitroverbindung werden in 250 ml Methanol gelöst. Man versetzt die Lösung im Autokalven mit 2 g Raney-Nickel, drückt 80 bar Wasserstoff auf und steigert nach Abklingen der Reaktionswärme die Temperatur auf 50°. Wenn die Wasserstoffaufnahme zum Stillstand gekommen ist, filtriert man die Lösung von Raney-Nickel ab, dampf das Filtrat im Rotationsverdampfer ein und erhält einen bräunlichen kristallinen Rückstand folgender Verbindung

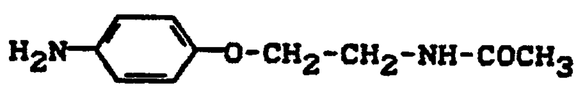

Fp. 96-97° (aus Toluol)
$^1$H-NMR ($CD_2Cl_2$)
δ = 1,97 ppm (3H, s),δ = 6,36 ppm (breit, 1H)
δ = 3,59 ppm (2H, q),δ = 6,64 ppm (2H, m)
δ = 3,97 ppm (2H, t),δ = 6,76 ppm (2H, m)

30,0 g N-2-(4-Aminophenoxy)-ethylacetamid werden in 36 ml 20 %iges Oleum und 18 ml 96 %ige Schwefelsäure bei 10-20° eingetragen. Man rührt 2 Stunden bei 20° nach, bis eine chromatographische Probe vollständige Sulfonierung anzeigt. Man trägt die Oleumlösung in 410 ml Wasser ein und erhitzt die erhaltene Lösung zwecks Verseifung 3 Stunden am Rückfluß. Aus der abgekühlten Lösung fallen nach Zusatz von 85 g Natriumchlorid feine Nädelchen aus. Man saugt den Niederschlag ab und wäscht ihn mit 25 %iger Nariumchloridlösung. Das Produkt entspricht in Form der freien Säure der Formel

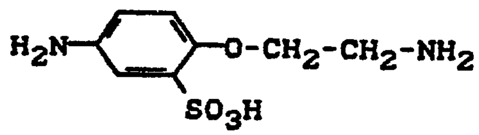

und ist identisch mit dem des Beispiels 3.

Beispiel 5

25,0 g N,N'-Bis-(2-hydroxyethyl)-oxalsäurediamid werden in 120 ml Dimethylsulfoxid gelöst, Nach Zusatz von 16 g pulverisiertem Kaliumhydroxid entsteht ein Kristallbrei, zu dem man innerhalb von 15 Minuten 40,0 g 4-Nitrofluor benzol zutropfen läßt. Man läßt die Temperatur auf 40° ansteigen und hält den Ansatz durch leichte Kühlung in diesem Temperaturbereich. Wenn die Wärmetönung abgeklungen ist, erwärmt man das Reaktionsgemisch noch 8 Stunden auf 40°. Es ist eine dicke gelbliche Suspension entstanden. Man rührt sie in Methanol ein, saugt das Produkt ab und wäscht es mit Methanol und Wasser. Nach Trocknen erhält man ein Produkt der Formel

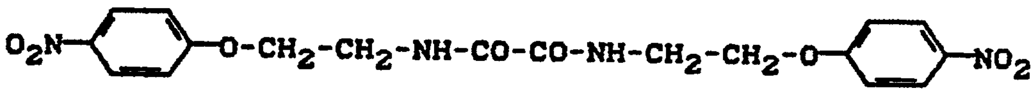

das in 10 Teilen Pyridin gelöst und in der Wärme mit 3,3 Teilen Wasser gefällt, zu schönen Nadeln vom Fp. 189-190° kristallisiert.
Massenspektrum (chemische Ionisation) $M + H^+ = 419$
$^1H$-NMR (DMSO)
δ = 3,53-3,60 ppm (2 x 2H, q)
δ = 4,22 ppm (2 x 2H, t)
δ = 7,10 ppm (2 x 2H, m)
δ = 8,13 ppm (2 x 2H, m)
δ = 8,93 ppm (2 x 1H, t)

40,0 g obigen Nitrophenoxyoxalsäurediamids werden in 400 ml Methanol unter Zusatz von 2 g Raney-Nickel im Autoklaven unter 80 bar Wasserstoffdruck gesetzt. Man heizt den Autoklaven im Laufe einer Stunde auf 70° und hält diese Temperatur noch einige Zeit, bis kein Wasser stoff mehr aufgenommen wird. Man trennt nun die ausgefallene Diaminoverbindung von Nickel durch Ausziehen mit Methanol-Wasser im Verhältnis 1:1 und saugt die aus dem Filtrat in weißen Kristallen ausgefallene Verbindung der Formel

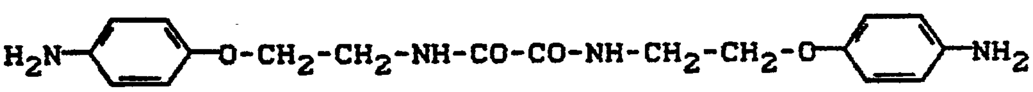

ab und trocknet sie.
Fp. 192-193° (aus Pyridin).
$^1H$-NMR (DMSO)
δ = 3,38-3,46 ppm (2 x 2H, q), δ = 6,43 ppm (2 x 2H, d)
δ = 3,86 ppm (2 x 2H, t), δ = 6,59 ppm (2 x 2H, d)
δ = 4,56 ppm (2 x 2H, s), δ = 8,76 ppm (2 x 1H, t)

Anstelle von Methanol kann die Hydrierung auch in Glykolmonomethylether als Lösungsmittel durchgeführt werden und nach Abfiltration des Nickels das Produkt durch Fällung mit Wasser oder durch Einengen isoliert werden.

24,8 g obigen Aminophenoxyoxalsäurediamids werden in 48 ml 20 %iges Oleum und 24 ml 96 %ige Schwefelsäure bei 10-15° in 30 Minuten eingetragen. Man rührt dann 3 Stunden bei 20° nach und überzeugt sich durch chromatographische Proben von der Vollständigkeit der Disulfonierung. Anschließend gießt man die Lösung in 560 ml Wasser ein, es entsteht eine grobkristalline Suspension der Verbindung:

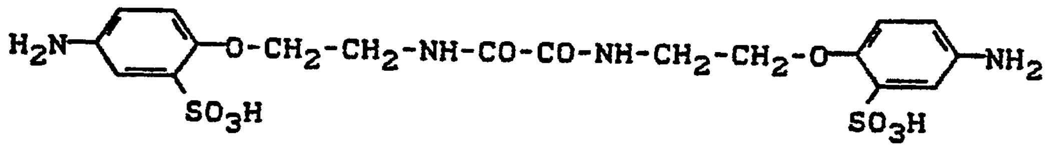

Nach Absaugen, Waschen mit Wasser und Trocknen erhält man 36,0 g.

30,8 g der erhaltenen Disulfonsäure werden in 175 ml 2n Natronlauge 45 Minuten am Rückfluß gekocht, bis Edukt und halbseitiges Verseifungsprodukt (Oxamidsäure) chromatographisch nicht mehr nachweisbar sind. Man setzt dann zur der heißen Mischung 105 ml 37 %ige Salzsäure und läßt die Lösung unter Rühren erkalten. Dabei kristallisiert die entstandene Verbindung der Formel:

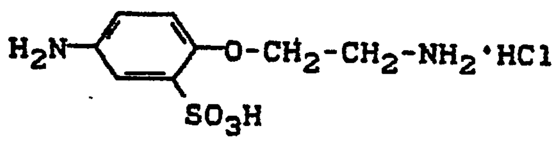

die identisch ist mit der des Beispiels 3, in schönen Nadeln aus.

Beispiel 6

20,0 g 2-Benzoylaminoethanol werden in 60 ml Chlorbenzol suspendiert. Zu der Suspension gibt man 9,7 g 50 %ige Natronlauge und verrührt einige Zeit, bis ein homogener Sirup entstanden ist. Man setzt nun 1,5 g Tetrabutylammoniumbromid zu und läßt dann in 15 Minuten 14,3 g 4-Nitrofluorbenzol zutropfen, wobei die Temperatur auf etwa 28-30°C ansteigt. Die gelbliche Suspension wird 3 Stunden bei 30° und weitere 5 Stunden bei 45° gerührt, bis die Umsetzung des Nitrofluorbenzols beendet ist. Das Reaktionsgemisch wird nun mit Wasser versetzt, der pH-Wert auf 5 gestellt und das Chlorbenzol im Vakuum mit Wasser abgetrieben. Es hinterbleibt eine schwach gelbe Suspension. Sie wird nach Abkühlen abfiltriert und der Filterkuchen mit Wasser gewaschen. Erhalten wird das N-[2-(4-Nitrophenoxy)-ethyl]-benzamid des Beispiels 3:

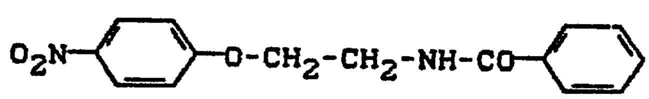

Produkt der allgemeinen Formel

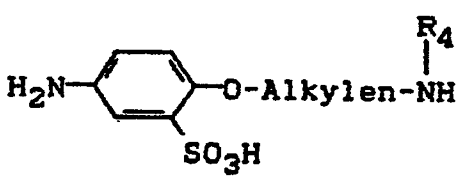

(XXII)

lassen sich erhalten, wenn analog zu den Beispielen 3 bis 6 anstelle der dort eingesetzten 2-Acylaminoethanole die Tabelle I aufgeführten Acylaminoalkanole mit 4-Nitrofluorbenzol zu entsprechenden acylierten 4-Nitrophenoxyalkylaminen umsetzt, diese zu den Aminoverbindungen reduziert und nachfolgend in beliebiger Reihenfolge Sulfierung und Verseifung durchführt.

**Tabelle 1**

| Nr. | Acylaminoalkanol | Verbindung der Formel (XXII) Alkylen | $R_4$ |
|---|---|---|---|
| 1 | N-(2-Hydroxyethyl)-formamid | $-CH_2-CH_2-$ | H |
| 2 | N-(2-Hydroxyethyl)-propionamid | " | H |
| 3 | N-(2-Hydroxyethyl)-4-chlorbenzamid | " | H |
| 4 | N-(2-Hydroxyethyl)-phthalimid | " | H |
| 5 | N-(3-Hydroxypropyl)-acetamid | $-CH_2-CH_2-CH_2$ | H |
| 6 | N-(3-Hydroxypropyl)-benzamid | " | H |
| 7 | N-(3-Hydroxypropyl)-phthalimid | " | H |
| 8 | N-(2-Hydroxypropyl)-acetamid | $-CH_2-CH(CH_3)-$ | H |
| 9 | N-(2-Hydroxypropyl)-benzamid | " | H |
| 10 | N-(4-Hydroxybutyl)-acetamid | $-(CH_2)_4-$ | H |
| 11 | N-(4-Hydroxybutyl)-benzamid | " | H |
| 12 | N-(4-Hydroxybutyl)-phthalimid | " | H |
| 13 | N-(3-Hydroxybutyl)-acetamid | $-CH_2-CH_2-CH(CH_3)-$ | H |
| 14 | N-(2-Hydroxybutyl)-benzamid | $-CH_2-CH(C_2H_5)-$ | H |
| 15 | N-(5-Hydroxypentyl)-acetamid | $-(CH_2)_5-$ | H |

**Tabelle 1** (Fortsetzung)

| Nr. | Acylaminoalkanol | Verbindung der Formel (XXII) Alkylen | $R_4$ |
|---|---|---|---|
| 16 | N-(5-Hydroxypentyl)-benzamid | $-(CH_2)_5-$ | H |
| 17 | N-(6-Hydroxyhexyl)-benzamid | $-(CH_2)_6-$ | H |
| 18 | N-Methyl-N-(2-hydroxyethyl)-acetamid | $-CH_2-CH_2-$ | $CH_3$ |
| 19 | N-Methyl-N-(2-hydroxyethyl)-benzamid | " | $CH_3$ |
| 20 | N-Ethyl-N-(2-hydroxyethyl)-acetamid | $-CH_2-CH_2-$ | $C_2H_5$ |
| 21 | N,N-Bis-(2-hydroxyethyl)-benzamid | $-CH_2-CH_2-$ | $CH_2-CH_2OH$ |
| 22 | N-Phenyl-N-(2-hydroxyethyl)-acetamid | $-CH_2-CH_2-$ | 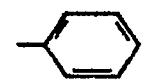 |
| 23 | N-Cyclohexyl-N-(2-hydroxyethyl)-acetamid | $-CH_2-CH_2-$ | 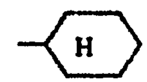 |
| 24 | N-Methyl-N-(3-hydroxypropyl)-acetamid | $-CH_2-CH_2-CH_2-$ | $CH_3$ |
| 25 | N-Ethyl-N-(3-hydroxypropyl)-benzamid | $-CH_2-CH_2-CH_2-$ | $C_2H_5$ |
| 26 | N-Methyl-N-(2-hydroxypropyl)-acetamid | $-CH_2-CH(CH_3)-$ | $CH_3$ |
| 27 | N,N'-Bis-(2-hydroxyethyl)-oxalsäurediamid | $-CH_2-CH_2-$ | H |
| 28 | N,N'-Bis-(3-hydroxypropyl)-oxalsäurediamid | $-CH_2-CH_2-CH_2-$ | H |
| 29 | N,N'-Bis-(2-hydroxypropyl)-oxalsäurediamid | $-CH_2-CH(CH_3)-$ | H |
| 30 | N,N'-Bis-(4-hydroxybutyl)-oxalsäurediamid | $-(CH_2)_4-$ | H |

<u>Tabelle 1</u> (Fortsetzung)

| Nr. | Acylaminoalkanol | Verbindung der Formel (XXII) Alkylen | $R_4$ |
|---|---|---|---|
| 31 | N,N'-Bis-(3-hydroxybutyl)-oxalsäurediamid | $-CH_2-CH_2-CH(CH_3)-$ | H |
| 32 | N,N'-Bis-(2-hydroxyethyl)-terephthalsäurediamid | $-CH_2-CH_2-$ | H |
| 33 | N,N'-Bis-(3-hydroxypropyl)-terephthalsäurediamid | $-CH_2-CH_2-CH_2-$ | H |
| 34 | N,N'-Bis-(2-hydroxyethyl)-isophthalsäurediamid | $-CH_2-CH_2-$ | H |
| 35 | N,N'-Bis-(2-hydroxyethyl)-bernsteinsäurediamid | " | H |
| 36 | N-(2-Hydroxyethyl)-methylurethan | " | H |
| 37 | N-(3-Hydroxypropyl)-ethylurethan | $-CH_2-CH_2-CH_2-$ | H |
| 38 | N-(2-Hydroxyethyl)-phenylurethan | $-CH_2-CH_2-$ | H |
| 39 | N-(3-Hydroxy-2-propyl)-acetamid | $-CH(CH_3)-CH_2-$ | H |
| 40 | N-(2-Hydroxy-1,2-dimethyl-ethyl)-acetamid | $-CH(CH_3)-CH(CH_3)-$ | H |
| 41 | N-(2-Hydroxy-1,1-dimethyl-ethyl)-acetamid | $-C(CH_3)_2-CH_2-$ | H |
| 42 | N-[2-(2-Hydroxyethoxy)-ethyl]-acetamid | $-C_2H_4-O-C_2H_4-$ | H |
| 43 | N-(2-Hydroxyethyl)-butyramid | $-CH_2-CH_2-$ | H |
| 44 | N-Methyl-N-(2-hydroxyethyl)-butyramid | $-CH_2-CH_2-$ | $CH_3$ |
| 45 | N-(3-Hydroxypropyl)-2-ethyl-butyramid | $-CH_2-CH(C_2H_5)-CH_2-$ | H |
| 46 | N-(3-Hydroxyethyl)-2-ethyl-butyramid | " | H |
| 47 | N-(2-Hydroxyethyl)-stearinsäureamid | $-CH_2-CH_2-$ | H |
| 48 | N,N'-Bis-(2-hydroxyethyl)-harnstoff | " | H |

Beispiel 7

9,5 g 2-Aminobenzol-1,4-disulfonsäure werden in 50 ml Wasser durch Zutropfen von 10 %iger Sodalösung und Einstellen eines pH-Wertes von 5,5 gelöst. Man läßt nach Abkühlen der Lösung bei 0-5° C 3,8 ml Cyanurfluorid innerhalb von 5 Minuten zutropfen, hält den pH-Wert mittels 10 %iger Sodalösung auf 4,5-4,7 und rührt zur Beendigung der Kondensation noch 20 Minuten unter den angegebenen Bedingungen weiter.

7,7 g Aminoalkoxy-triphendioxazin-Komponente aus Beispiel 2 werden in 160 ml Wasser suspendiert und mit 15,4 ml 2n Natronlauge bei pH 12 gelöst.

Die Lösung der Reaktivkomponente und des Farbkörpers werden nun in 50 ml vorgelegtes Wasser bei 0-5° C gleichzeitig so eingetropft, daß sich im Reaktionsgemisch ein pH-Wert von 8,5 einstellt und beide Lösungen in etwa 15 Minuten gleichzeitig eingetragen sind.

Um während des Eintropfens der Lösungen den angegebenen pH-Wert halten zu können, muß zusätzlich 2n Natronlauge in das Reaktionsgemisch eindosiert werden.

Die entstehende rote Lösung wird zur Beendigung der Kondensation einige Stunden bei 0-5° mit 2n Natronlauge auf pH 8,5 gehalten. Man läßt dann die Temperatur unter ständiger pH-Kontrolle über Nacht auf 20° ansteigen, stellt den pH-Wert dann auf 7,5 und salzt den Farbstoff durch Zusatz von etwa 20 % Kaliumchlorid aus. Der Niederschlag wird abgesaugt, mit 15-20 %iger Kaliumchloridlösung gewaschen und der Filterkuchen nach Anteigen mit Phosphatpuffer bei 50° im Vakuum getrocknet. Der erhaltene Farbstoff entspricht der Formel

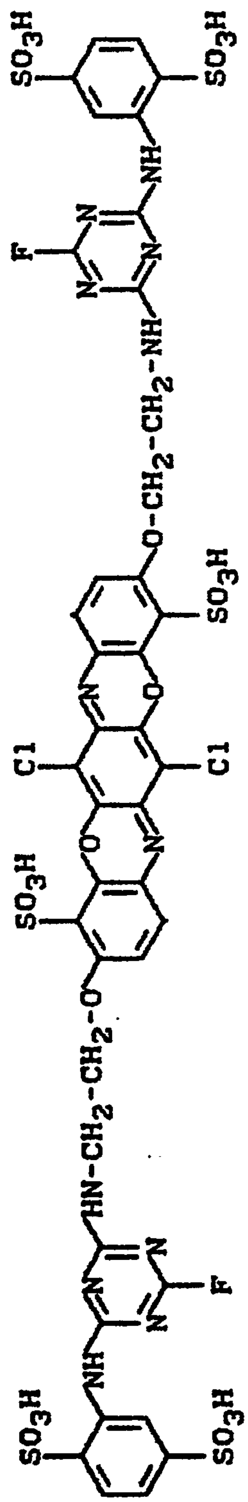

Er färbt Cellulosefasern nach den für Reaktivfarbstoffe bekannten Färbeverfahren in lichtechten, kräftigen, blaustichig roten Tönen.

$\lambda_{max}$ = 540 nm, 507 in Wasser

Beispiel 8

6,5 g 3-Aminobenzolsulfonsäure werden in 20 ml Wasser suspendiert. Nach Zusatz von 0,1 g Natriumfluorid läßt man zu der Suspension 3,35 ml Cyanurfluorid bei 0-5° zutropfen und hält den pH-Wert im Reaktionsgemisch mit 2n Sodalösung auf 3,5. Es entsteht eine klare Lösung.

7,7 g Aminoalkoxy-triphendioxazin-Komponente aus Beispiel 2 werden in 155 ml Wasser durch Zugabe von 15,4 ml 2n Natronlauge bei pH 12 gelöst.

Man läßt nun die Lösungen der Reaktivkomponente und der Farbbase in 50 ml vorgelegtes Wasser bei 0-5° so eintropfen, daß sich im Reaktionsgemich ein pH-Wert von 8,5-8,7 einstellt und beide Lösungen in etwa 10 Minuten gleichzeitig eingetragen sind. Durch zusätzliche Zugabe von 2n Natronlauge hält man während dieses Vorganges den pH-Wert im Reaktionsgemisch aufrecht.

Die entstandene Suspension wird noch einige Stunden bei 0-5° gehalten, dann läßt man die Temperatur unter ständiger weiterer pH-Kontrolle auf 20° ansteigen. Man salzt den erhaltenen Farbstoff durch Salzzugabe völlig aus, saugt ihn ab und wäscht ihn mit 10 %iger Natriumchlorid-Lösung. Nach Anteigen mit Phosphatpuffer vom pH 6,5 wird er im Umluftschrank bei 55° getrocknet.

Der erhaltene Farbstoff entspricht der Formel

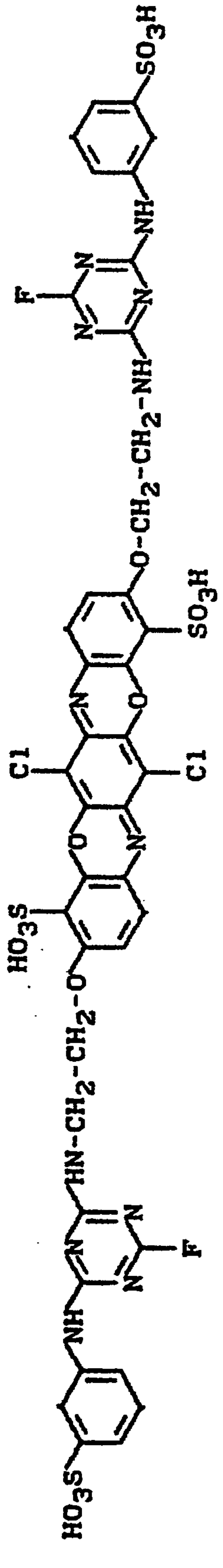

Er färbt Cellulosefasern aus langer Flotte in lichtechten, sehr kräftigen, blaustichig roten Tönen.

$\lambda_{max}$ = 545 nm, 512 nm in Wasser

Beispiel 9

10,0 g Bis-β-aminoethoxytriphendioxazinkomponente aus Beispiel 2 werden in 250 ml Wasser durch Zutropfen von 2n Natronlauge bis zum pH-Wert von 12 gelöst. 4,6 ml 2,4,6-Trifluor-5-chlorpyrimidin werden in 50 ml Aceton gelöst. Man läßt beide Lösungen gleichzeitig bei 20° in eine Mischung von 100 ml Wasser und 50 ml Aceton in 15 Minuten so zutropfen, daß beide Lösungen proportional gleichmäßig in das Reaktionsgemisch gelangen und hält in dem Reaktionsgemisch den pH-Wert mit 2n Natronlauge auf 8,5-9,0. Wenn die Reaktion beendet ist und kein weiterer Natronlaugeverbrauch mehr erfolgt, versetzt man die Reaktionsmischung mit 10 %iger Natriumchloridlösung bis zur völligen Ausfällung des Farbstoffes, saugt die Fällung ab und wäscht das abfiltrierte Produkt mit verdünnter Natriumchloridlösung.

Nach Trocknen bei 55° im Umluftschrank erhält man in Form eines Pulvers den Farbstoff der Formel

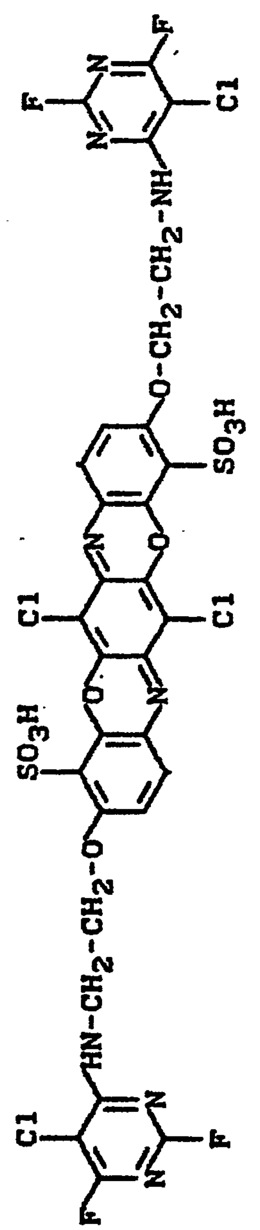

der Cellulosefasern und Wolle nach den üblichen Färbetechniken in licht- und naßechten blaustichig roten Tönen färbt.

$\lambda_{max}$ = 538 nm, 504 nm in Wasser

Beispiel 10

6,5 g 3-Aminobenzolsulfonsäure werden wie in Beispiel 8 beschrieben in 80 ml Wasser gelöst und mit 3,7 ml Cyanurfluorid bei 0-5° und pH 3,5 zur Reaktivkomponente umgesetzt.

8,1 g einer Aminopropoxytriphendioxazinkomponente der Formel

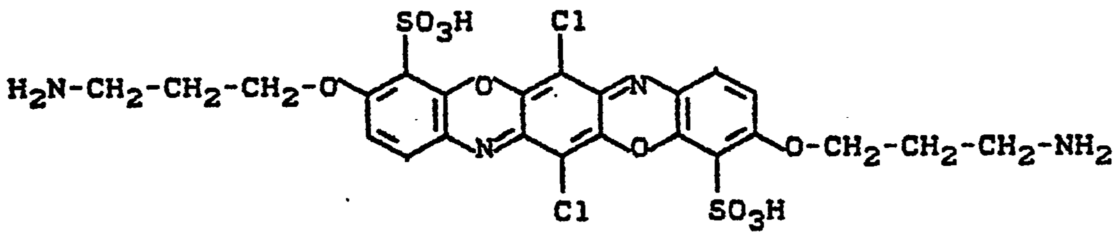

hergestellt durch Kondensation von Chloranil mit der Aminkomponente des Beispiels 6, Tabelle 1, Nr. 5 oder 6 und anschließenden oxidativen Ringschluß nach der Lehre des Beispiels 2, oder auf die Weise des Beispiels 11 werden in 160 ml Wasser bei pH 12 mit 2n Natronlauge gelöst.

Man läßt nun beide Lösungen durch gleichzeitiges Eintropfen in Wasser bei 0-5° und pH 8,5-8,7 reagieren, wobei der pH-Wert im Reaktionsgemisch durch Zugabe von 2n Natronlauge aufrechterhalten wird. Nach mehrstündigem Nachrühren unter pH-Kontrolle läßt man die Temperatur auf 20° ansteigen und isoliert den Farbstoff durch Aussalzen, Filtration und Waschen mit Natriumchloridlösung. Der Farbstoff entspricht der Formel

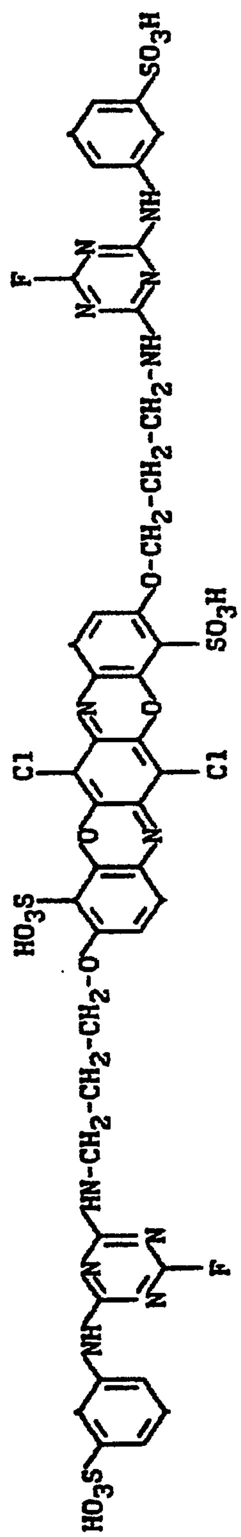

Er färbt Cellulosefasern aus langer Flotte in lichtechten, sehr kräftigen, blaustichig roten Tönen.

$\lambda_{max}$ = 544 nm, 511 nm in Wasser.

Beispiel 11

46,5 g 3-(4-Aminophenoxy)-propylamin-hydrochlorid werden in 465 ml Wasser gelöst. Man stellt den pH-Wert auf 6,0 ein, gibt 24,6 g 2,3,5,6-Tetrachlorchinon und 80 ml Methanol zu und erwärmt den Ansatz auf 40°. Der pH-Wert wird mit 2n Sodalösung dabei ständig auf 6,0-5,8 gehalten. Nach beendeter Umsetzung wird das ausgefallene Produkt abgesaugt, mit Wasser gewaschen und getrocknet. Es entspricht der Formel

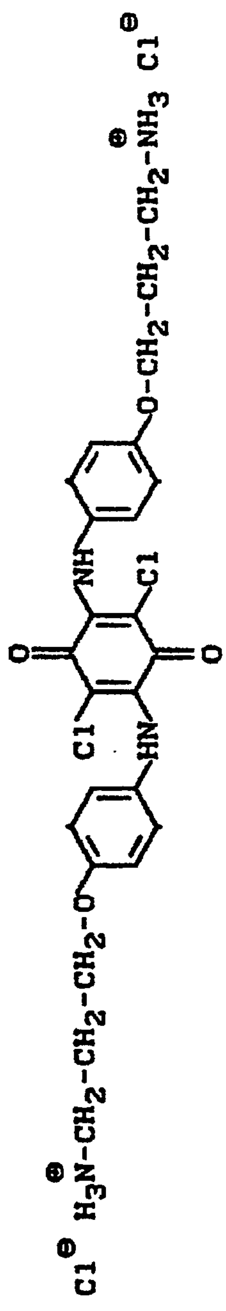

30,0 g des erhaltenen Kondensationsproduktes werden in 120 ml 20 %iges Oleum bei 0-10° innerhalb von 3 Stunden eingetragen. Man rührt den Ansatz gegebenenfalls bei 20° nach, bis ein Chromatogramm die Einführung je einer Sulfonsäuregruppe pro aromatischen Ring anzeigt.

Man steigert die Temperatur auf 25° und trägt nun innerhalb von 1 Stunde 25,4 g Kaliumperoxodisulfat ein, man läßt die Temperatur auf 30-35° ansteigen und hält sie nach dem Eintragen des Oxidationsmittels noch 30 Minuten auf 30°. Die Lösung wird nach Beendigung der Reaktion in 1200 g Eis eingerührt, das ausgefallene Produkt abgesaugt und durch Waschen mit Wasser von Schwefelsäure befreit.

Das Produkt entspricht formelmäßig der eingangs des Beispiels 10 eingesetzten Bis-aminopropoxy-triphendioxazindisulfonsäure.

Beispiel 12

14,0 g Cyanurchlorid werden in 80 ml Aceton gelöst und die Lösung auf 80 g Eis gegeben. Zu der Suspension läßt man nun bei 0-5° eine neutralisierte Lösung von 6,5 g 3-Aminobenzolsulfonsäure und 6,5 g 4-Aminobenzolsulfonsäure in 120 ml Wasser in 1 Stunde zutropfen und hält im Reaktionsgemisch den pH-Wert mit 2n Sodalösung auf 4,0-4,5. Nach beendeter Umsetzung wird die Lösung geklärt.

19,8 g Bis-2-amino ethoxy-triphendioxazinkomponente des Beispiels 2 werden in 380 ml Wasser mit 39,6 ml 2n Natronlauge bei pH 12 gelöst.

Die Lösung der Reaktivkomponente und des Farbkörpers werden in 100 ml vorgelegtes Wasser gleichzeitig so eingetropft, daß sich im Reaktionsgemisch ein pH-Wert von 8,5 einstellt und beide Lösungen in 15-30 Minuten eingetragen sind. Man hält im Reaktionsgemisch den pH-Wert mit 2n Natronlauge auf 8,5 und führt die Kondensation bei diesem pH-Wert zu Ende. Aus der erhaltenen Lösung salzt man den Farbstoff mit Natriumchlorid aus, saugt die Fällung ab und wäscht sie mit 20 %iger Natriumchloridlösung. Nach Trocknung erhält man einen Farbstoff, welcher der Formel

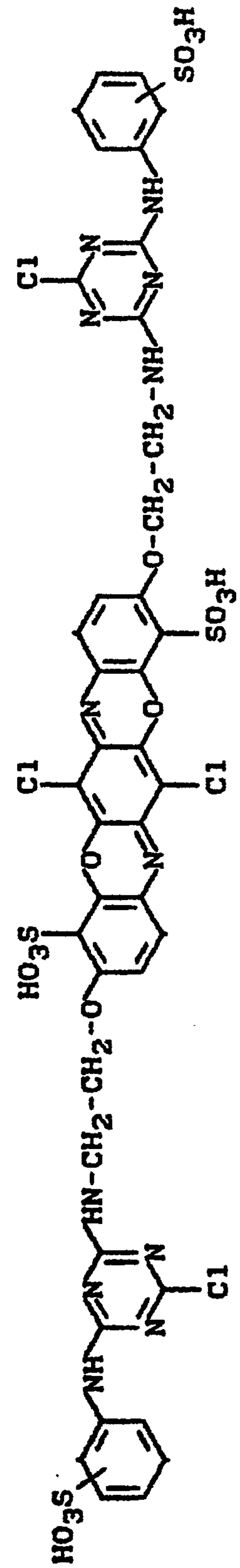

m:p = 1:1

entspricht und Cellulosefasern in lichtechten, kräftigen, blaustichigen Rottönen färbt.

$\lambda_{max}$ = 544, 511 nm in Wasser.

Weitere, Cellulosefasern rot färbende Reaktivfarbstoffe der allgemeinen Formel (I) werden erhalten, wenn man die in Tabelle II aufgeführten Bis-aminoalkoxy-triphendioxazin-Farbbasen der Spalte 2 mit den Reaktivkomponenten der Spalte 3 kondensiert.

**T a b e l l e II**

| Beispiel | Triphendioxazinkomponente | Reaktivkomponente |
|---|---|---|
| 13 | 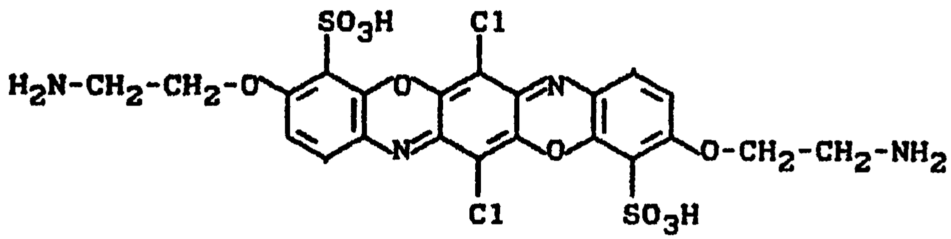 | 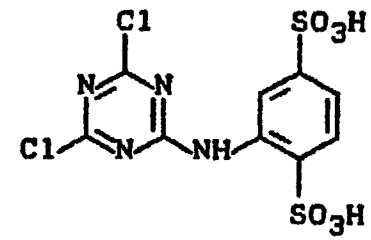 |
| 14 | " | 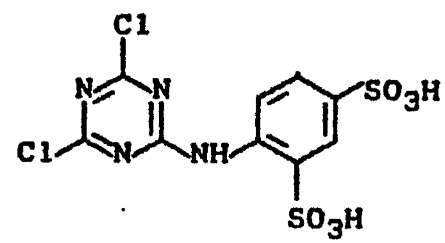 |
| 15 | " | 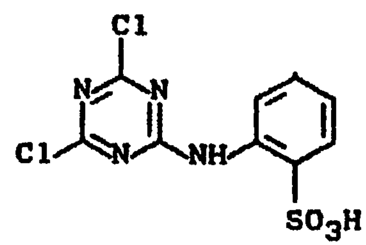 |

**Tabelle II** (Fortsetzung)

| Beispiel | Triphendioxazinkomponente | Reaktivkomponente |
|---|---|---|
| 16 | 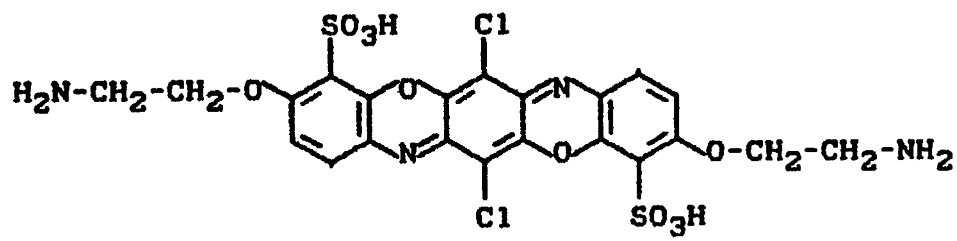 | 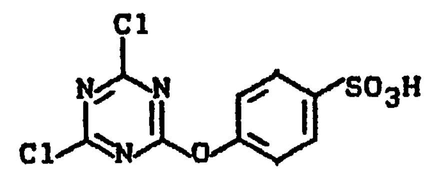 |
| 17 | " | 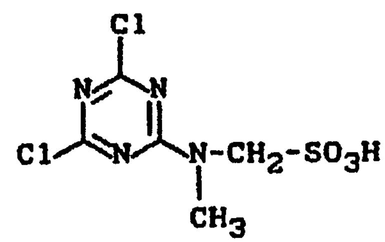 |
| 18 | " | 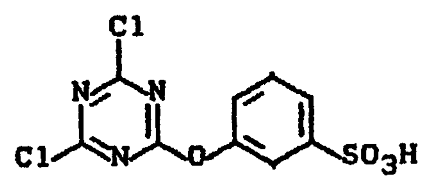 |

**T a b e l l e II** (Fortsetzung)

| Beispiel | Triphendioxazinkomponente | Reaktivkomponente |
|---|---|---|
| 19 | 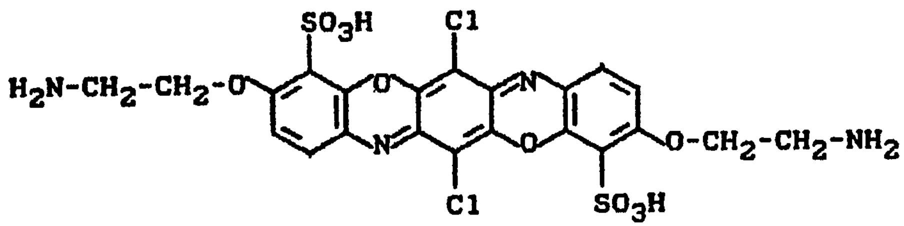 | 1. 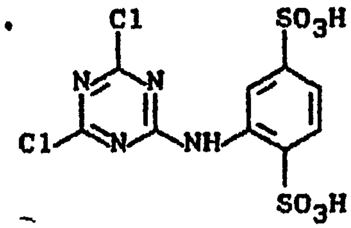 2. 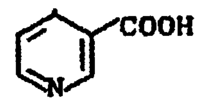 |
| 20 | " $\lambda_{max}$ = 541 nm, 508 nm in Wasser | 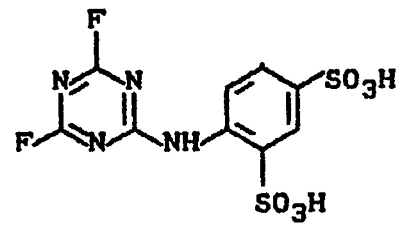 |
| 21 | " $\lambda_{max}$ = 546 nm, 511 nm in Wasser | 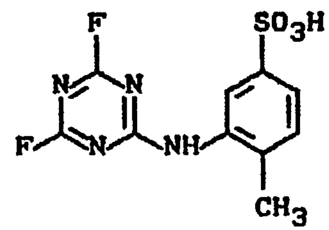 |

**Tabelle II** (Fortsetzung)

| Beispiel | Triphendioxazinkomponente | Reaktivkomponente |
|---|---|---|
| 22 | 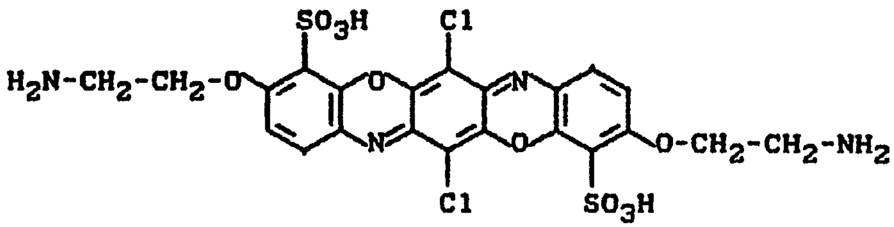 | 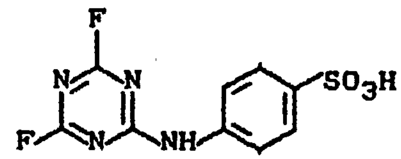 |
| 23 | " | 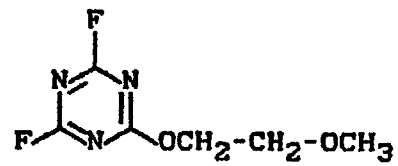 |
| 24 | " | 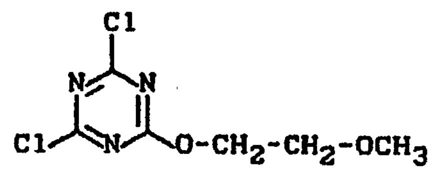 |
| 25 | 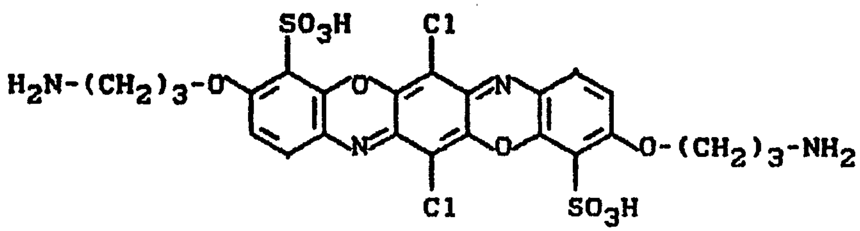 | 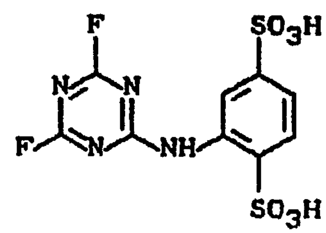 |

$\lambda_{max}$ = 542 nm, 508 nm in Wasser

**Tabelle II** (Fortsetzung)

| Beispiel | Triphendioxazinkomponente | Reaktivkomponente |
|---|---|---|
| 26 | 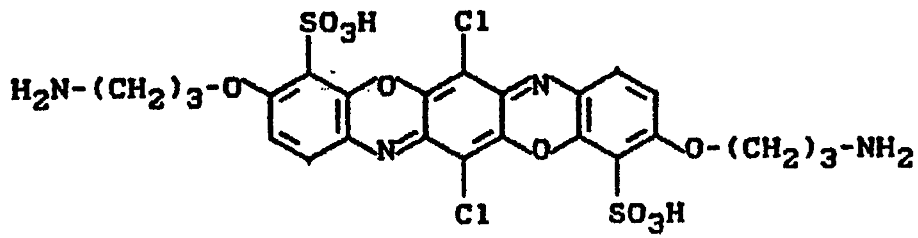<br>$\lambda_{max}$ = 548 nm,508 nm in Wasser | 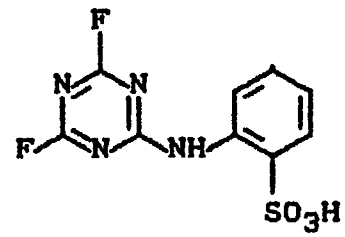 |
| 27 | "<br>$\lambda_{max}$ = 543 nm, 507 nm in Wasser | 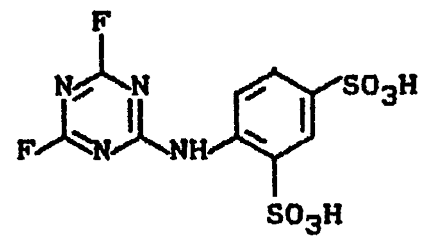 |
| 28 | " | 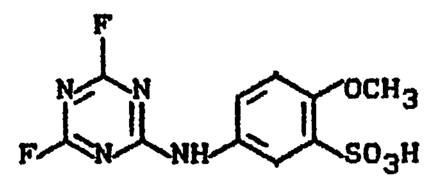 |

**T a b e l l e II** (Fortsetzung)

| Beispiel | Triphendioxazinkomponente | Reaktivkomponente |
|---|---|---|
| 29 | 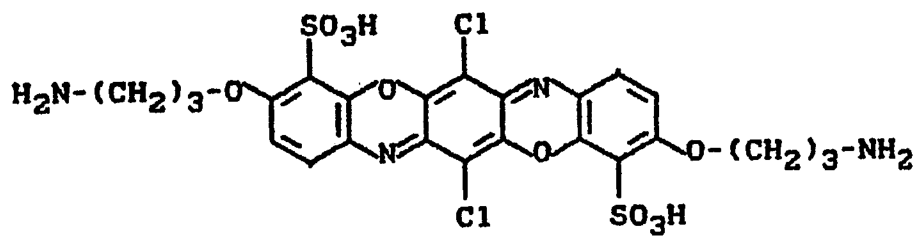 | 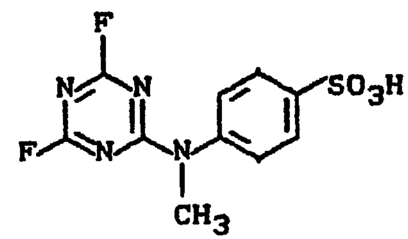 |
| 30 | " | 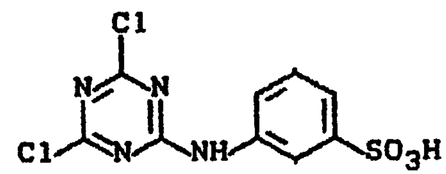 |
| 31 | " | 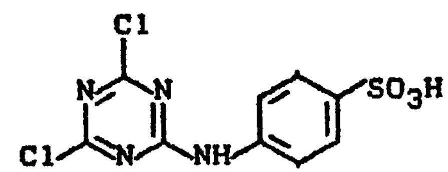 |

<u>Tabelle II</u> (Fortsetzung)

| Beispiel | Triphendioxazinkomponente | Reaktivkomponente |
|---|---|---|
| 32 | 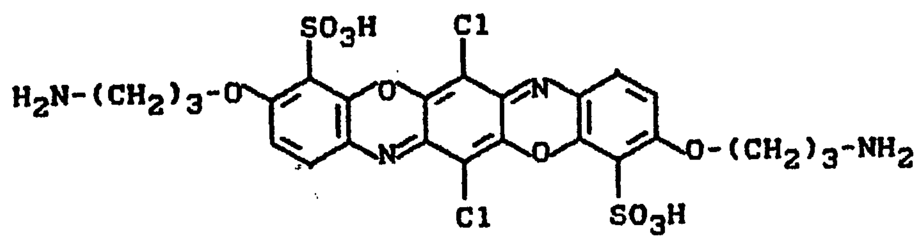 | 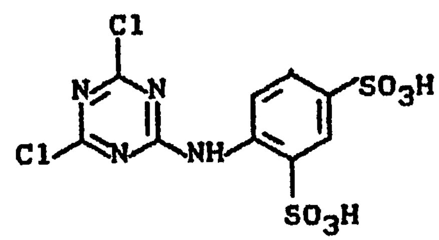 |
| 33 | " | 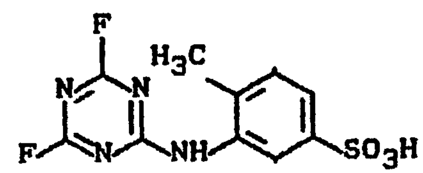 |
| 34 | 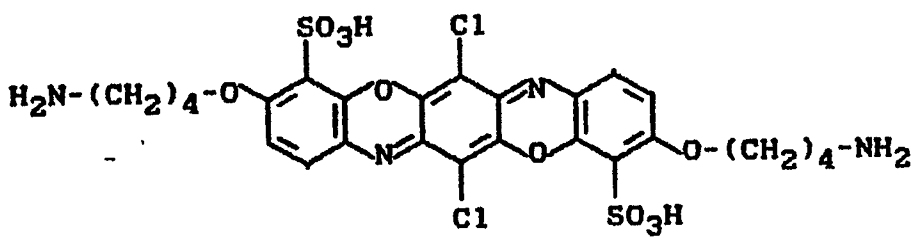 | 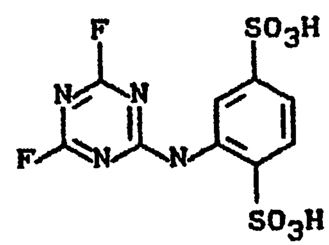 |

**Tabelle II** (Fortsetzung)

| Beispiel | Triphendioxazinkomponente | Reaktivkomponente |
|---|---|---|
| 35 | 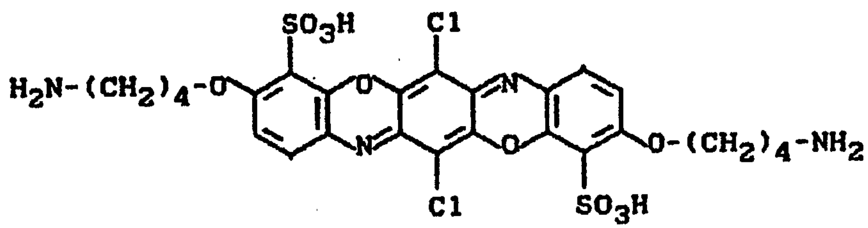 | 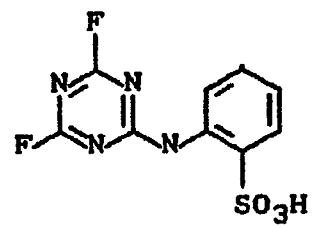 |
| 36 | " | 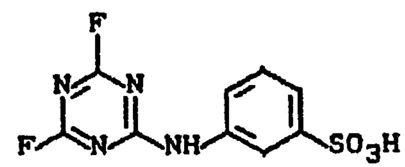 |
| 37 | " | 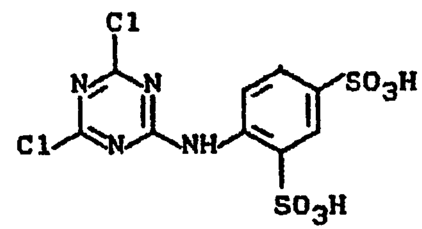 |
| 38 | " | 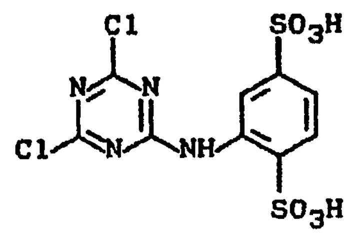 |

**T a b e l l e II** (Fortsetzung)

| Beispiel | Triphendioxazinkomponente | Reaktivkomponente |
|---|---|---|
| 39 | 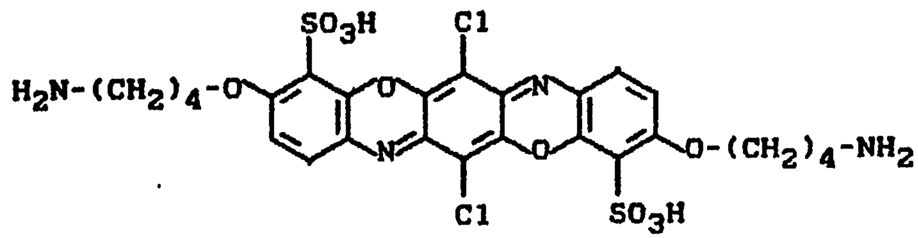 | 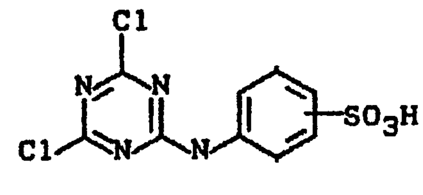 m:p = 1:1 |
| 40 | 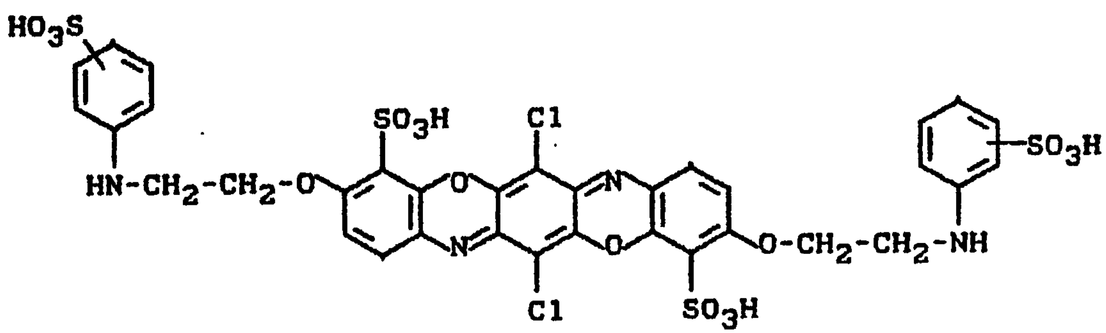 | 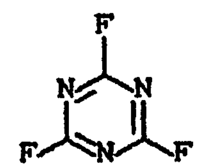 |
| 41 | " | 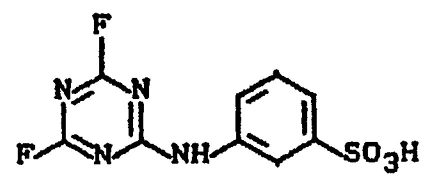 |

**Tabelle II** (Fortsetzung)

| Beispiel | Triphendioxazinkomponente | Reaktivkomponente |
|---|---|---|
| 42 | 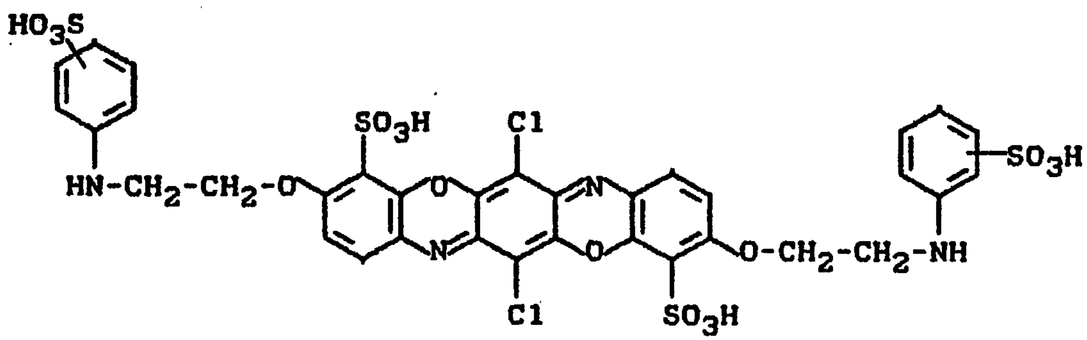 | 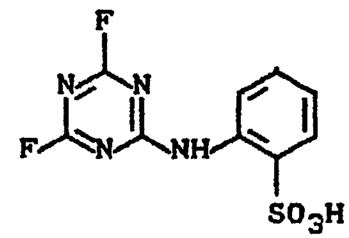 |
| 43 | " | 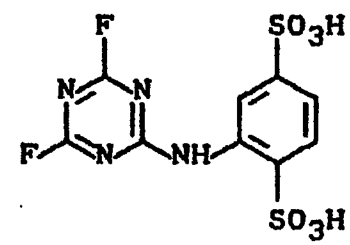 |
| 44 | " | 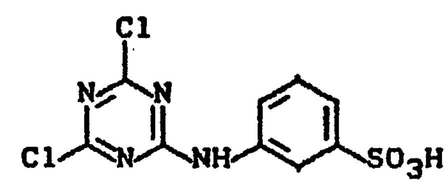 |

**Tabelle II (Fortsetzung)**

| Beispiel | Triphendioxazinkomponente | Reaktivkomponente |
|---|---|---|
| 45 | 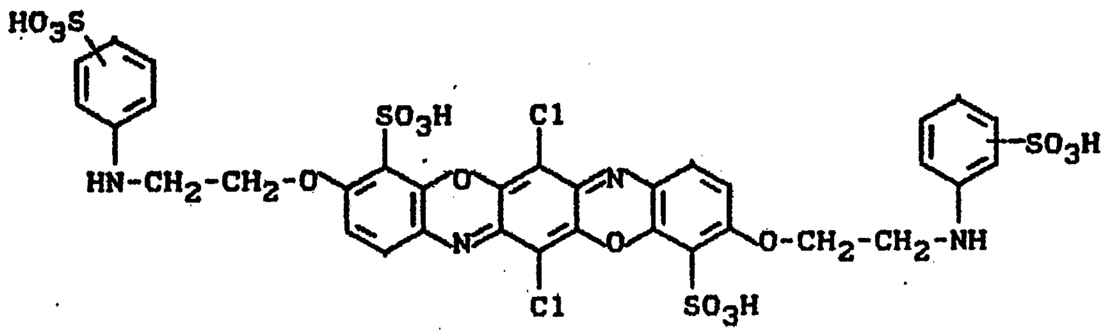 | 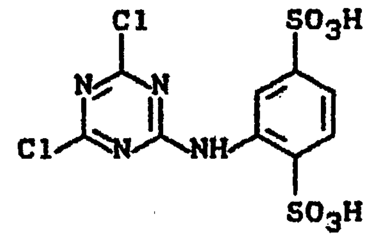 |
| 46 | " | 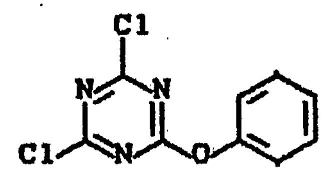 |
| 47 | 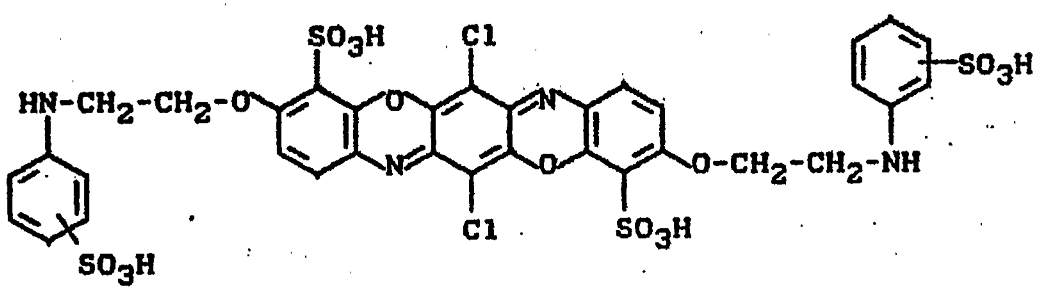 | 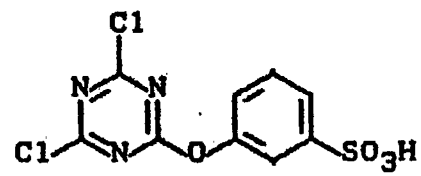 |

Tabelle II (Fortsetzung)

| Beispiel | Triphendioxazinkomponente | Reaktivkomponente |
| --- | --- | --- |
| 48 | 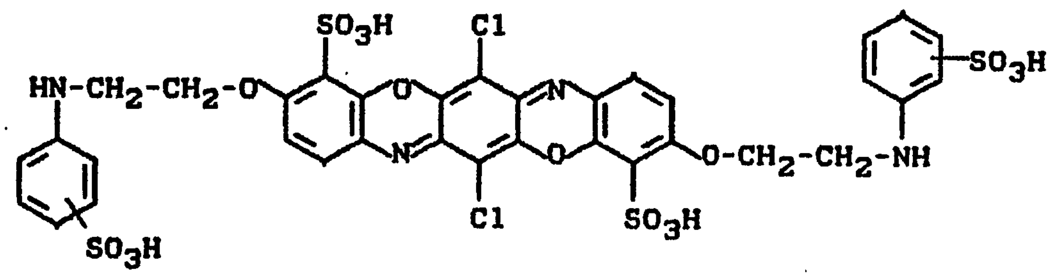 | 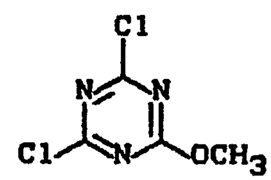 |
| 49 | " | 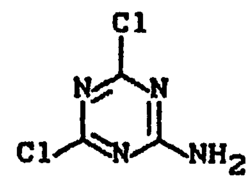 |
| 50 | " | 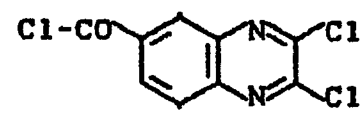 |
| 51 | " | 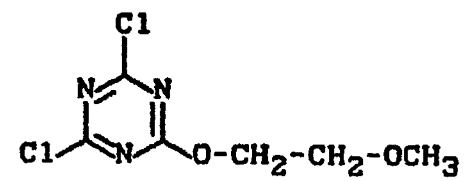 |

**Tabelle II** (Fortsetzung)

| Beispiel | Triphendioxazinkomponente | Reaktivkomponente |
|---|---|---|
| 52 | 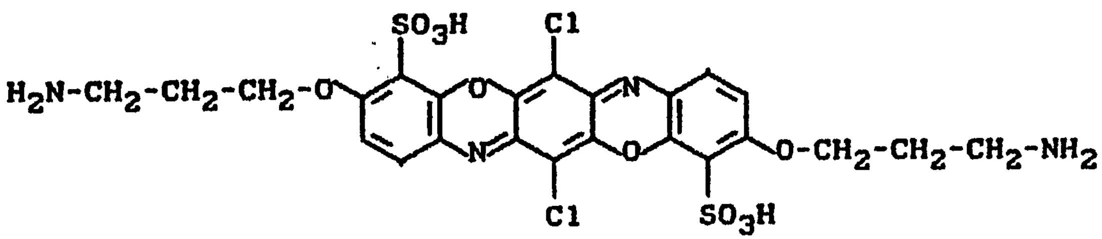 | 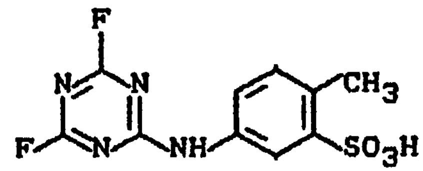 |
| 53 | " | 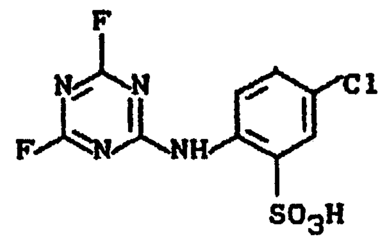 |
| 54 | " | 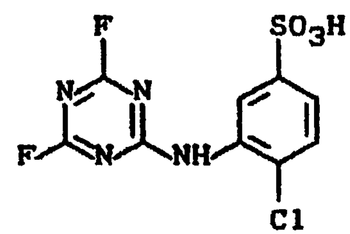 |

T a b e l l e  II (Fortsetzung)

| Beispiel | Triphendioxazinkomponente | Reaktivkomponente |
| --- | --- | --- |
| 55 | 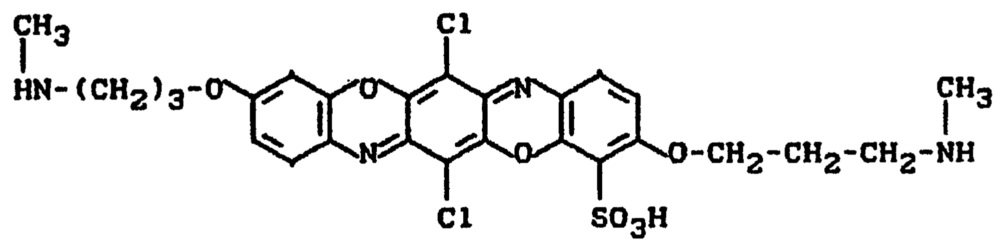 | 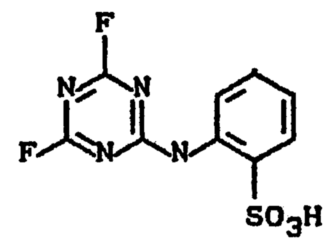 |
| 56 | " | 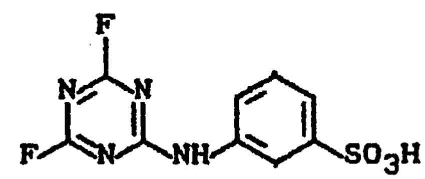 |
| 57 | " | 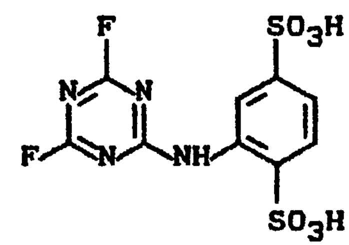 |

**Tabelle II** (Fortsetzung)

| Beispiel | Triphendioxazinkomponente | Reaktivkomponente |
|---|---|---|
| 57 | 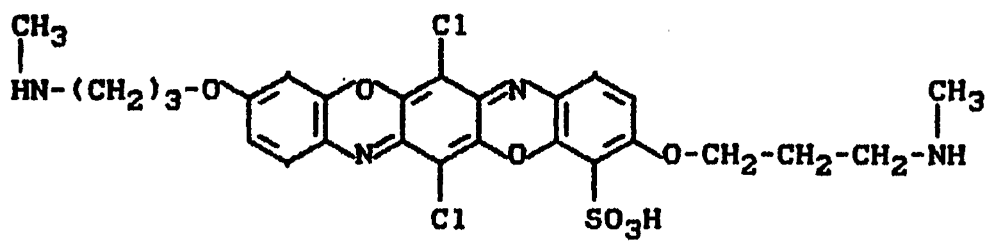 | 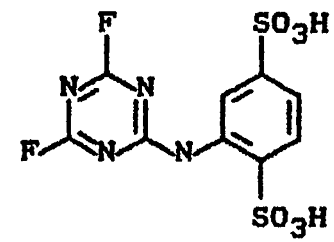 |
| 58 | " | 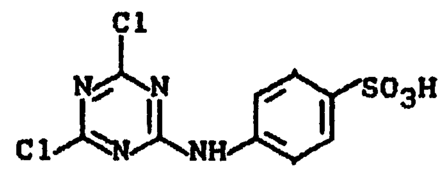 |
| 59 | 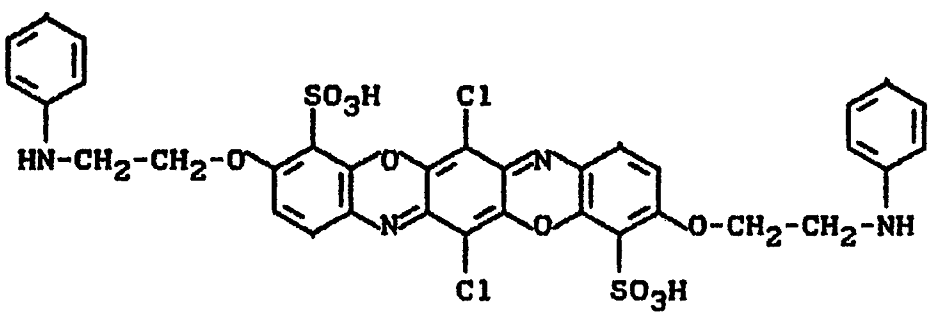 | 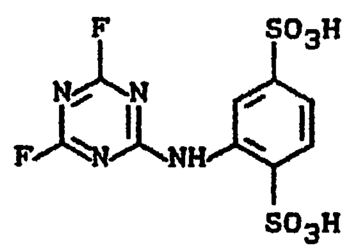 |

## Tabelle II (Fortsetzung)

| Beispiel | Triphendioxazinkomponente | Reaktivkomponente |
|---|---|---|
| 60 | 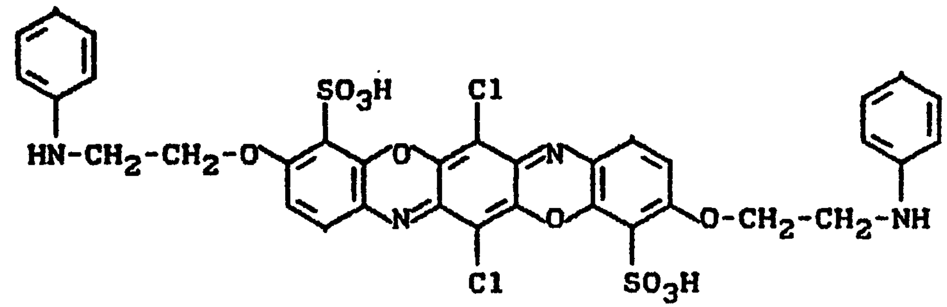 | 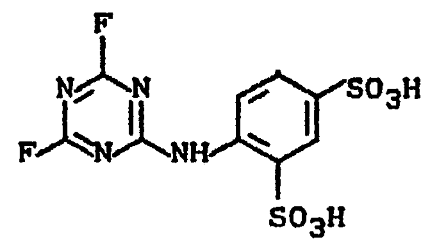 |
| 61 | 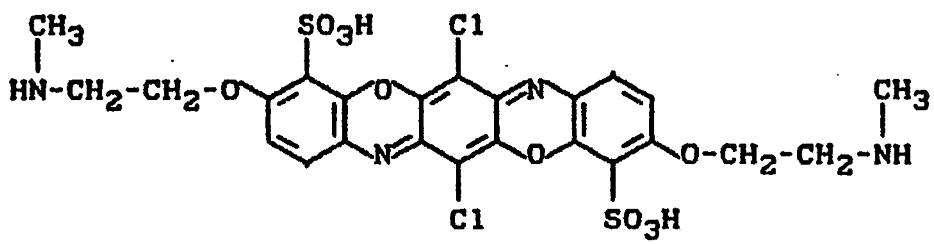 $\lambda_{max}$ = 543 nm,508 nm in Wasser | 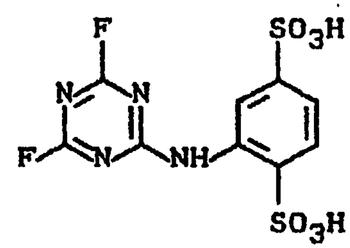 |
| 62 | " $\lambda_{max}$ = 549 nm,514 nm in Wasser | 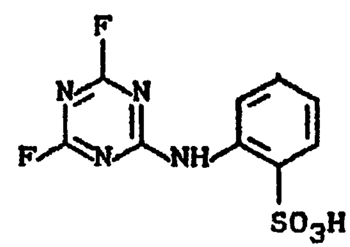 |

## Tabelle II (Fortsetzung)

| Beispiel | Triphendioxazinkomponente | Reaktivkomponente |
|---|---|---|
| 63 | 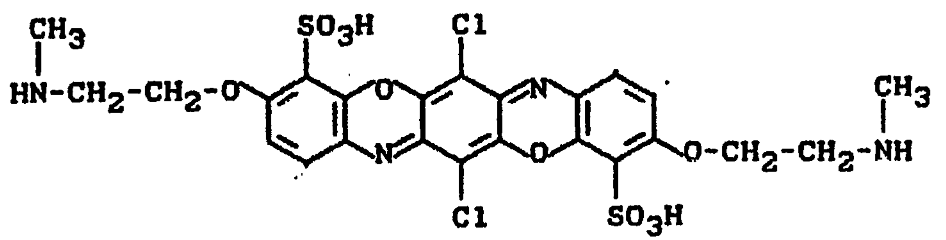 | 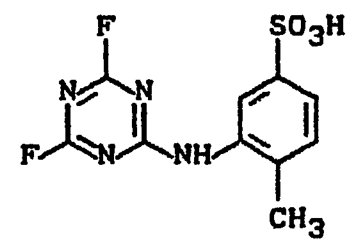 |
| 64 | 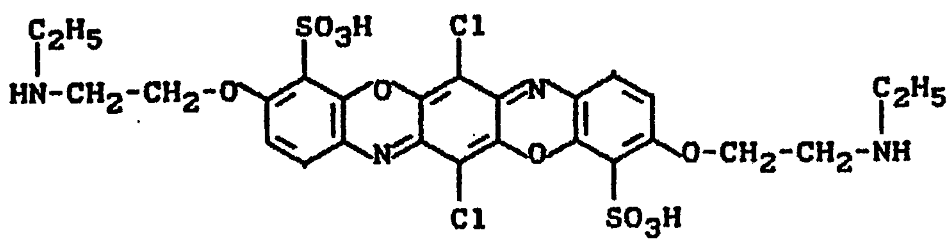 | 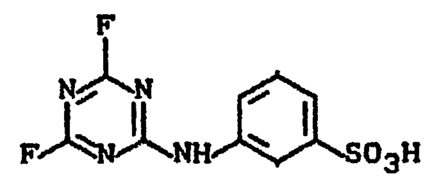 |
| 65 | " | 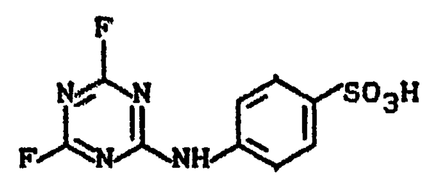 |

**Tabelle II (Fortsetzung)**

| Beispiel | Triphendioxazinkomponente | Reaktivkomponente |
|---|---|---|
| 66 | 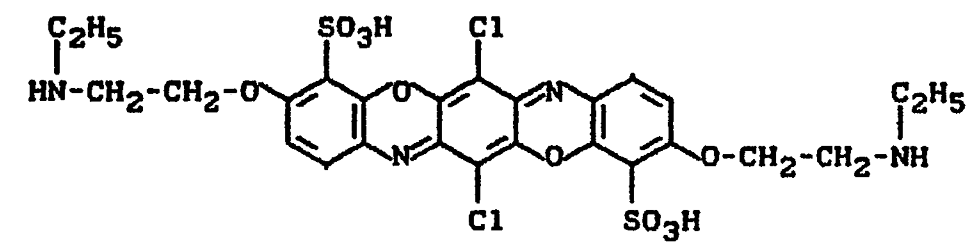 | 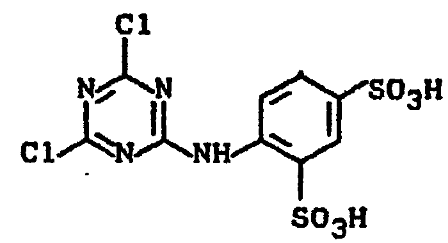 |
| 67 | 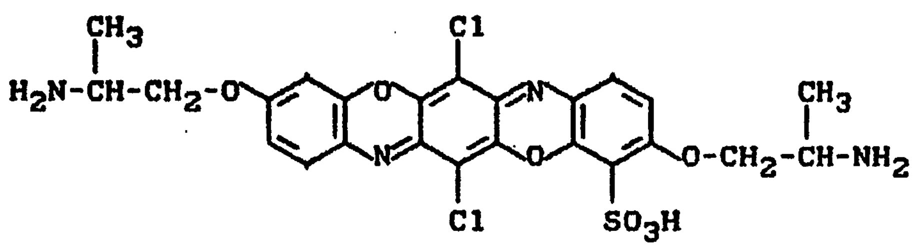 | 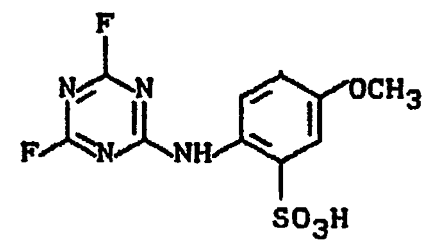 |
| 68 | " | 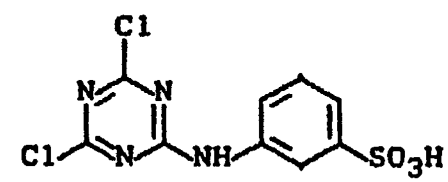 |

**Tabelle II (Fortsetzung)**

| Beispiel | Triphendioxazinkomponente | Reaktivkomponente |
|---|---|---|
| 69 | 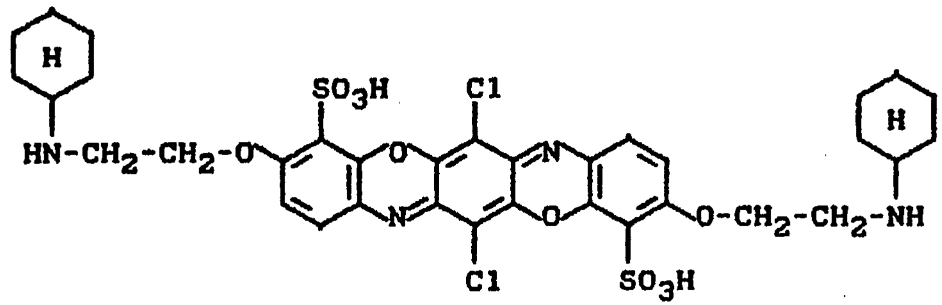 | 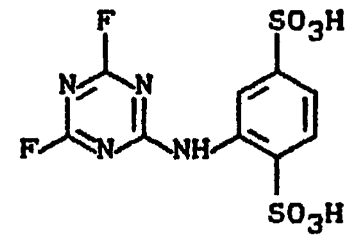 |
| 70 | 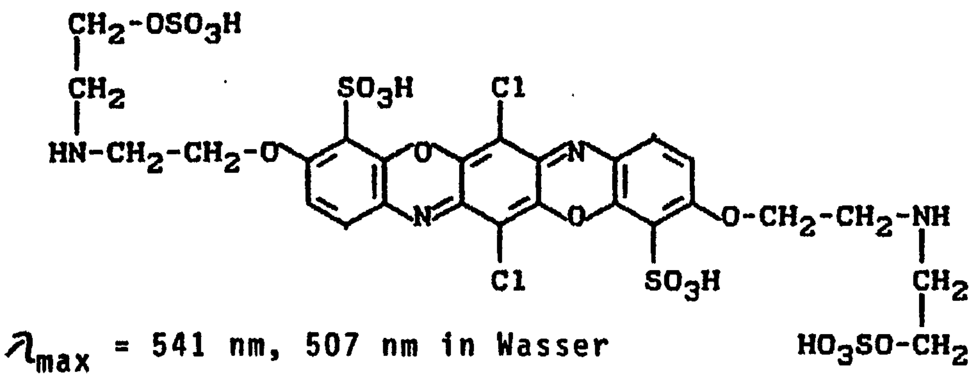 | 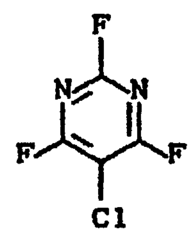 |

$\lambda_{max}$ = 541 nm, 507 nm in Wasser

**Tabelle II** (Fortsetzung)

| Beispiel | Triphendioxazinkomponente | Reaktivkomponente |
|---|---|---|
| 71 | 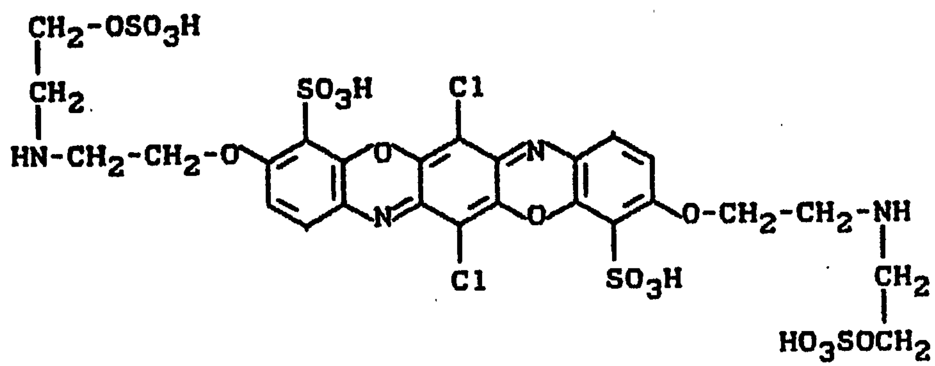 | 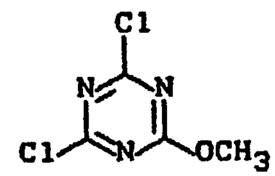 |
| | $\lambda_{max}$ = 548 nm, 514 nm in Wasser | |
| 72 | " | 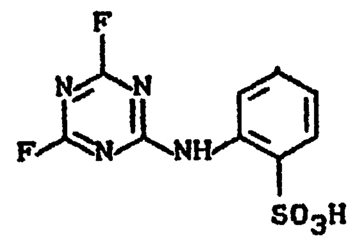 |
| 73 | " | 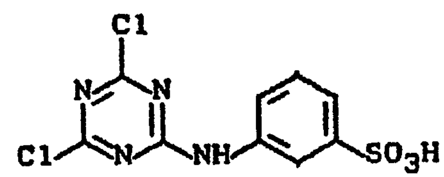 |

**Tabelle II** (Fortsetzung)

| Beispiel | Triphendioxazinkomponente | Reaktivkomponente |
| --- | --- | --- |
| 74 | 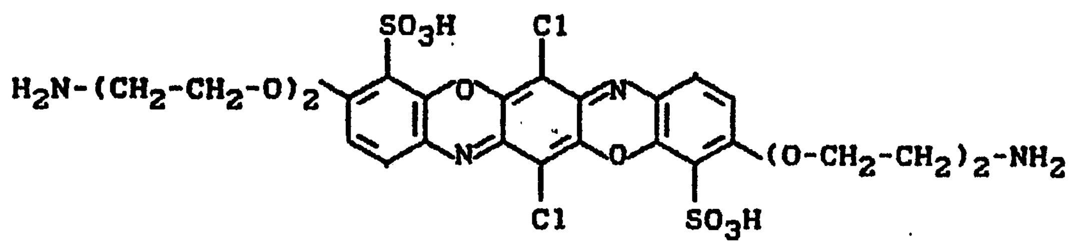 | 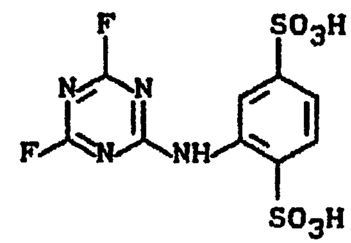 |
| 75 | 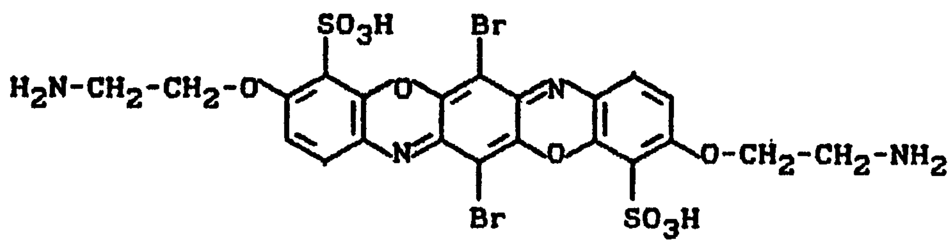 | 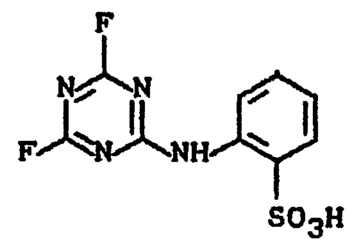 |
| 76 | " | 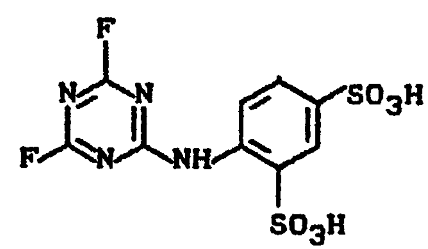 |

## <u>T a b e l l e   II</u> (Fortsetzung)

| Beispiel | Triphendioxazinkomponente | Reaktivkomponente |
|---|---|---|
| 77 | 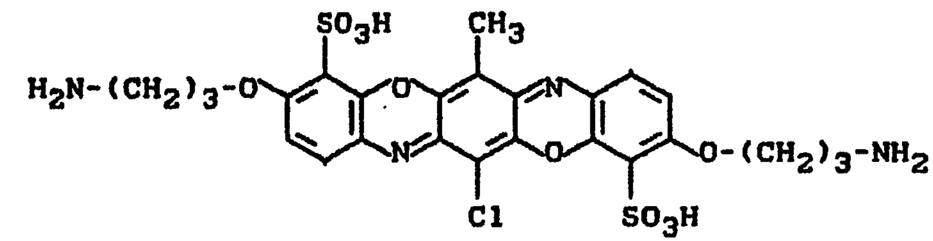 | 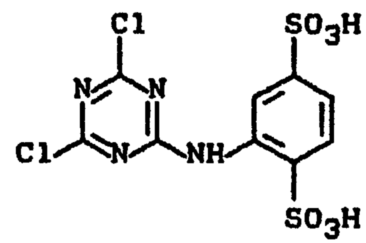 |
| 78 | 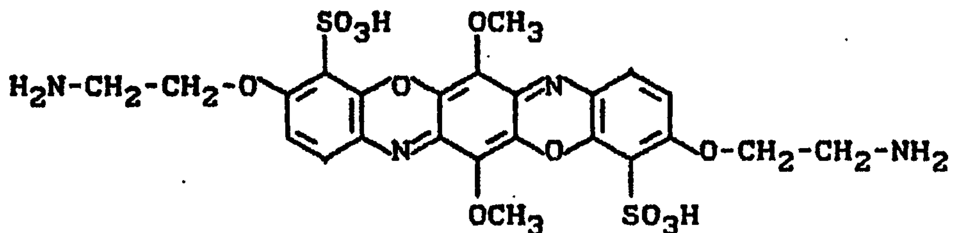 | 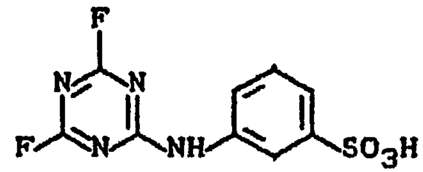 |
| 79 | 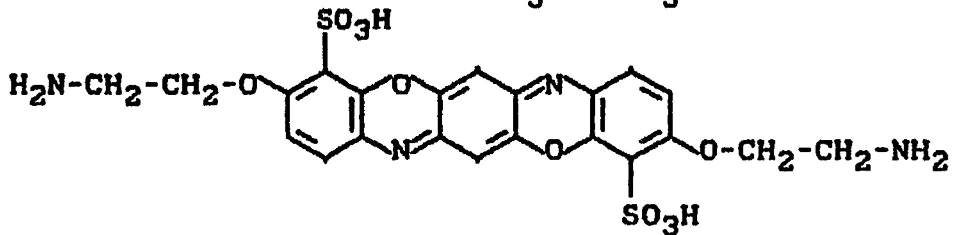 | 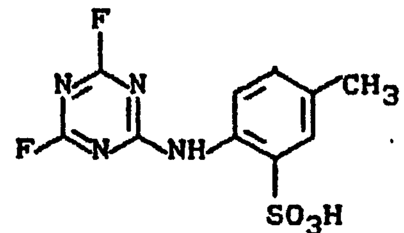 |
| 79a | 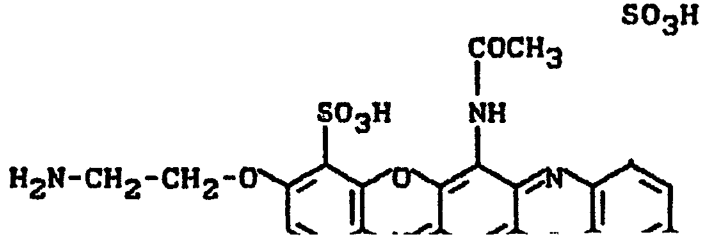 | 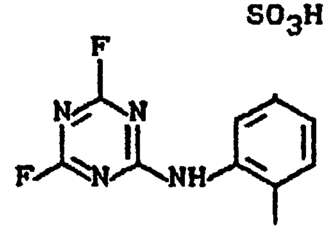 |

**T a b e l l e II** (Fortsetzung)

| Beispiel | Triphendioxazinkomponente | Reaktivkomponente |
|---|---|---|
| 77 | 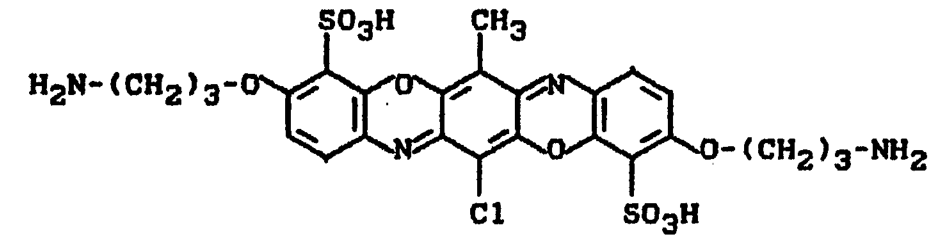 | 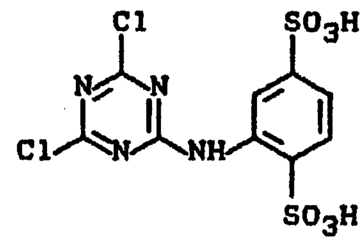 |
| 78 | 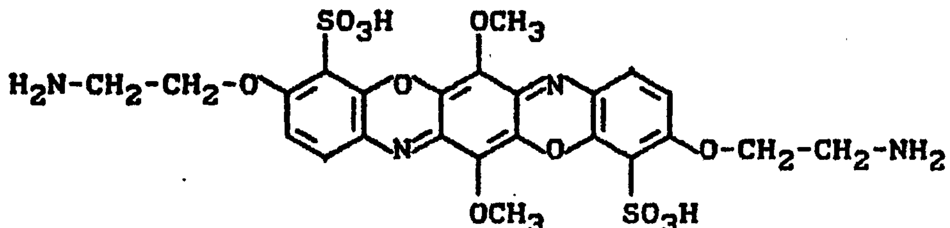 | 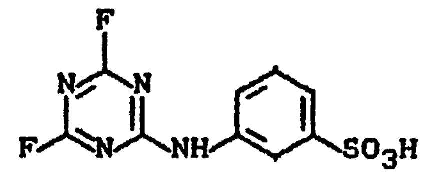 |
| 79 | 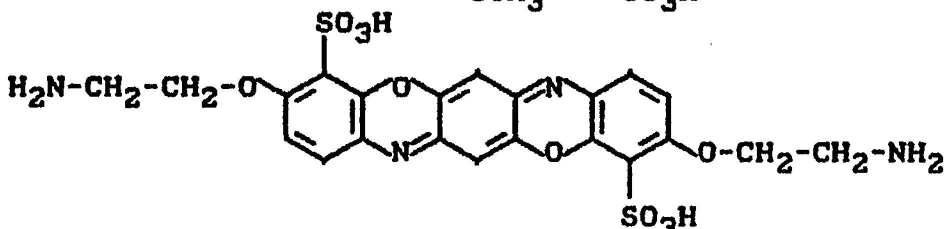 | 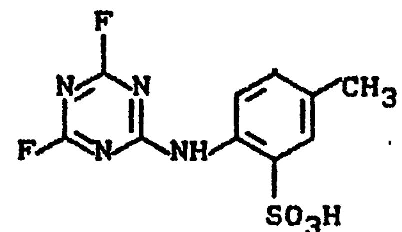 |
| 79a | 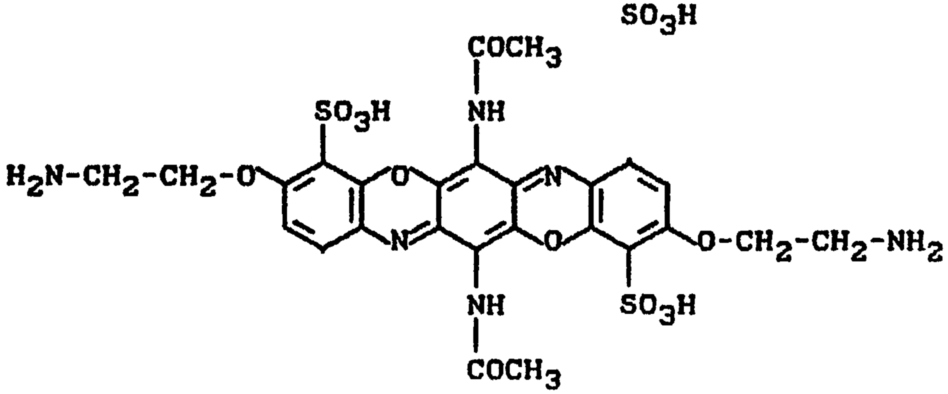 | 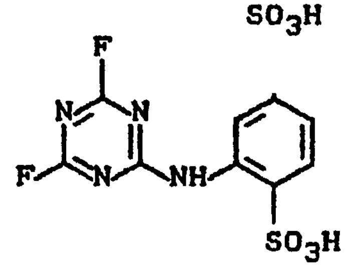 |

Beispiel 80

10,0 g Aminophenoxytriphendioxazin-Komponente der Formel

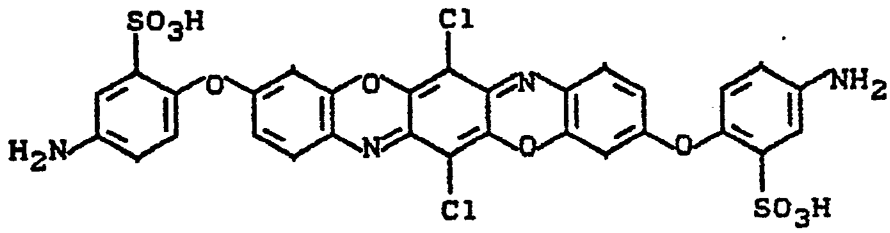

(Herstellung siehe unten) werden in 200 ml Wasser gelöst. Man stellt einen pH-Wert von 6,5-7 ein und läßt bei 0-5° die Lösung einer Reaktivkomponente zulaufen, die nach den Angaben des Beispiels 7 aus 7,2 g 2-Aminobenzol-1,4-disulfonsäure und 2,9 ml Cyanurfluorid hergestellt wurde. Dabei wird der pH-Wert im Reaktionsgemisch mit 2n Sodalösung laufend auf 6,0-6,5 gehalten. Nach beendeter Umsetzung erwärmt man unter weiterer pH-Kontrolle die Lösung auf 20-25° und rührt in diesem Temperaturbereich noch 2-3 Stunden nach. Der Farbstoff wird aus der Lösung mit Kaliumchlorid ausgesalzen, die Fällung abgesaugt, das Filtergut mit 20 %iger Kaliumchloridlösung gewaschen und nach Anteigen mit Phosphatpuffer bei 50° im Vakuum getrocknet. Das erhaltene Produkt entspricht der Formel

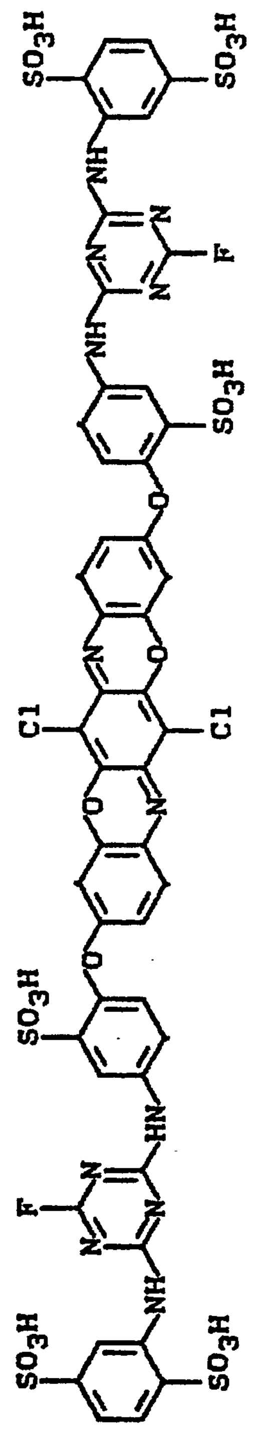

und färbt Cellulosefasern nach den bekannten Reaktivfärbeverfahren in naßechten blaustichig, roten Tönen.

$\lambda_{max}$ = 538, ~ 513 nm in Wasser.

Die oben eingesetzte Bis-(p-aminophenoxy)-triphendioxazin-disulfonsäure wird folgendermaßen hergestellt:

32,4 g 2,3,5,6-Tetrachlorchinon, 64,0 g 4-Amino-4'-acetyl-aminodiphenylether, 32,5 g Natriumacetat werden in 250 ml Ethanol 2-3 Stunden zum Rückfluß erhitzt, bis kein Chloranil mehr nachweisbar ist. Man saugt die ausgefallenen braunen Kristalle ab und wäscht sie mit Methanol oder Ethanol bis zum

farblosen Ablauf, anschließend mit heißem Wasser und trocknet das Produkt bei 60° C im Umluftschrank.

40,0 g des erhaltenen 2,5-Bis-(4'(-4"-acetylaminophenoxy)-anilino)-3,6-dichlorbenzochinons werden bei 0-5°C in eine Mischung von 100 ml 20 %igen Oleum und 100 ml 96 %iger Schwefelsäure eingetragen. Man läßt die Temperatur über Nacht auf 15° ansteigen. Das Edukt ist verschwunden, und es sind zwei Sulfonsäuregruppen in das Molekül eingetreten. Man trägt in die braune Lösung nun bei 20° C beginnend 32,8 g kaliumperoxodisulfat in etwa 1 Stunde ein und läßt dabei die Temperatur auf 28-30° ansteigen. Man rührt noch etwa 30 Minuten bei dieser Temperatur, bis die Umsetzung beendet ist und gießt dann die Lösung in 1200 g Eis-Wasser ein. Die erhaltene Suspension kann entweder zur Verseifung direkt 2 Stunden zum Rückfluß erhitzt werden, oder sie wird abgesaugt und mit 20 %iger Natriumchloridlösung von der Hauptmenge Schwefelsäure befreit.

Verfährt man auf die letztere Weise, so wird der feuchte Filterkuchen anschließend zur Verseifung in 400 ml Wasser bei 100° gelöst, die Lösung mit 195 ml 37 %iger Salzsäure versetzt und die erhaltene Suspension 2 Stunden am Rückfluß gekocht. Man saugt dann das ausgefallene Produkt ab und wäscht es mit Wasser bis zum praktisch neutralen Ablauf.

Das Produkt kristallisiert durch Anrühren in Methanol und Zusatz von 25 ml 2n Natronlauge in sternförmigen Kristallen. Es entspricht in Form des Natriumsalzes der am Beginn des Beispiels angegebenen Formel und enthält gemäß der Elementaranalyse 2 Sulfonsäuregruppen im Molekül.

$\lambda_{max}$ = 513 nm, ~ 540 nm in Wasser.

$^1$H-NMR ($CDCl_3$)
δ = 6,42 ppm (2x1H, s)
δ = 6,62-6,69 ppm (2x2H, m)
δ = 6,81 ppm (2x1H, d, $J_{ortho}$ ~ 8,4 Hz)
δ = 7,09 ppm (2x1H, d, $J_{ortho}$ ~ 8,4 Hz)
δ = 7,27 ppm (2x1H, d, $J_{meta}$ ~ 2,4 Hz)

Beispiel 81

10,0 g Bis-(p-aminophenoxy)-triphendioxazin-disulfonsaures Natrium aus Beispiel 80 werden in 200 ml Wasser gelöst.

Man läßt 3,2 ml 2,4,6-Trifluor-5-chlorpyrimidin bei 25° in 15 Minuten zutropfen und hält den pH-wert mit 2n Sodalösung auf 6,0, bis die Kondensation beendet ist. Der erhaltene Farbstoff der Formel

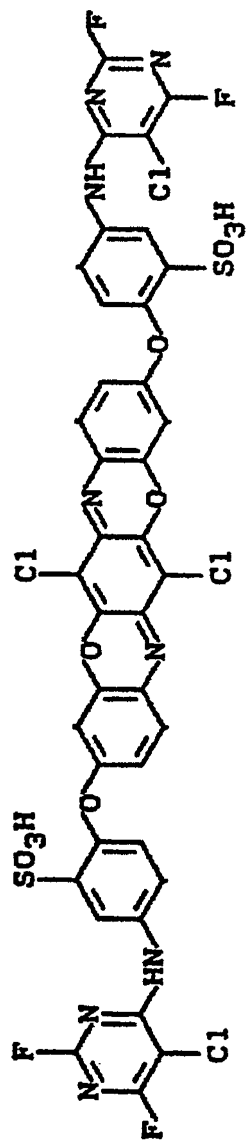

wird durch Aussalzen, Absaugen, Waschen mit Natriumchloridlösung und Trocknen als rotbraunes Pulver isoliert. Es färbt Wolle waschecht in blaustichig roten Tönen.

Beispiel 82

10,0 g Bis-(p-aminophenoxy)-triphendioxazin-disulfonsäure des Beispiels 80 werden in 200 ml Wasser gelöst. Man läßt bei 0-5° und pH 6,0 die Suspension einer Reaktivkomponente zulaufen, die nach den Angaben des Beispiels 1 aus 5,7 g 2-Aminobenzolsulfonsäure und 3,1 ml Cyanurfluorid hergestellt wurde. Der pH-Wert wird mit 2n Sodalösung auf 6,0 gehalten. Man rührt unter diesen Bedingungen zur Beendigung der Kondensation noch 2 Stunden bei 0-5° weiter, erwärmt dann auf 20-25° und salzt den Farbstoff aus der Lösung mit Kaliumchlorid aus. Er wird abgesaugt, mit 10 %iger Kaliumchloridlösung gewaschen, mit Phosphatpufferlösung von pH 6,5 angeteigt undbei 50° im Vakuum getrocknet. Er entspricht der Formel

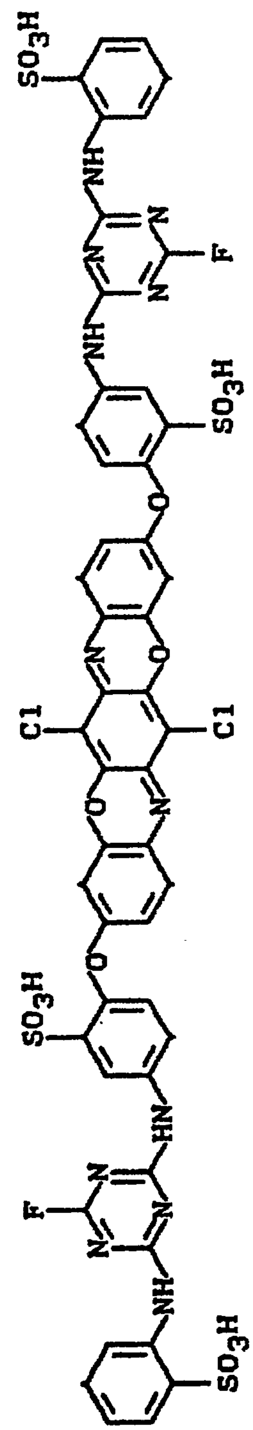

und färbt Cellulosefasern in blaustichig roten Tönen.
$\lambda_{max}$ = 514 nm, ~ 547 nm in Wasser.

Beispiel 83

Trägt man 20,0 g 2,5-Bis-(4'-(4"-acetylaminophenoxy)-anilino)-3,6-dichlorbenzochinon (Herstellung siehe Beispiel 80) statt in eine Mischung von gleichen Volumina 20 %igen Oleums und 96 %iger Schwefelsäure in 100 ml 20 %iges Oleum ein, rührt über Nacht bei 20° nach, gibt dann 16,4 g Kaliumperoxodisulfat im Laufe von 1 Stunde so zu, daß eine Temperatur von 30-35° C im Reaktionsgemisch gehalten wird und arbeitet anschließend auf, so erhält man eine Verbindung der Formel

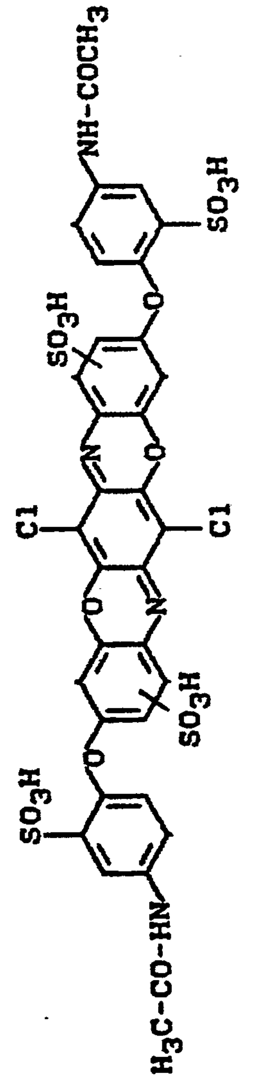

deren nach Verseifung in verdünnter Schwefelsäure oder Salzsäure entstandenes Verseifungsprodukt sich mit 2,4,5-Trifluor-5-chorpyrimidin, 2- oder 3-(2,4-Difluor6-triazinyl)-aminobenzolsulfonsäure, 2-(2,4-Difluor-6-triazinyl)-aminobenzol-1,4-disulfonsäure, 3- oder 4-(2,4-Dichlortriazinyl)-aminobenzolsulfonsäure zu Reaktivfarbstoffen kondensieren läßt, die Cellulosefasern in naßechten Tönen blaustichig rot färben.

Weitere rotstichig blau färbende Reaktivfarbstoffe erhält man wenn man an Stelle des 4-Acetylamino-4'-aminodiphenylethers im Beispiel 80 folgende Diphenyletherverbindungen mit 2,3, 5,6-Tetrachlorchinon kondensiert:

4-Acetylamino-4'-amino-2'-sulfodiphenylether
3-Acetylamino-4'-amino-diphenylether
3-Acetylamino-4'-amino-2'-sulfodiphenylether
2-Acetylamino-4'-amino-diphenylether

und im übrigen analog den Beispielen 80 und 83 Ringschluß und Verseifung anschließt sowie nachfolgend mit 2- oder 3-(Difluortriazinyl)- oder 2- oder 3-(Dichlortriazinylamino)-benzolsulfonsäure oder 2-(2,4-Difluortriazinyl)- oder 2-(2,4-Dichlortriazinyl)-benzol1,4-disulfonsäure umsetzt.

Beispiel 84

9,5 g 4-Aminobenzol-1,3-disulfonsäure werden in 50 ml Wasser durch Zutropfen von 10 %iger Sodalösung und Einstellen eines pH-Wertes von 5,5 gelöst. Man läßt nach Abkühlen der Lösung bei 0-5° C 3,8 ml Cyanurfluorid innerhalb von 5 Minuten zutropfen, hält den pH-Wert mittels 10 %iger Sodalösung auf 4,5-4,7 und rührt zur Beendigung der Kondensation noch 20 Minuten unter den angegebenen Bedingungen weiter.

8,05 g einer Aminoalkoxytriphendioxazin-Komponente der Formel (Herstellung siehe Beispiel 85)

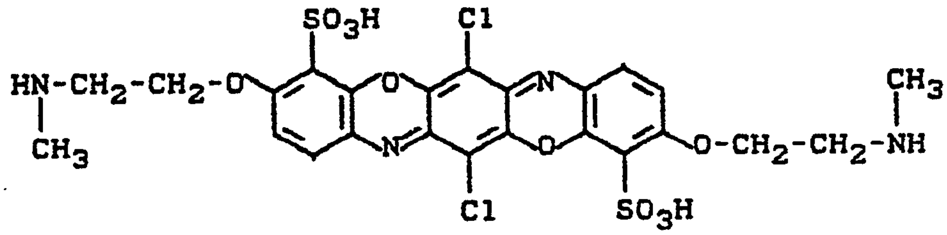

werden in 160 ml Wasser suspendiert und unmittelbar vor der Umsetzung mit 12,9 ml 2n Natronlauge bei pH 11,5 gelöst.

Die Lösung der Reaktivkomponente und des Farbkörpers werden nun in 50 ml vorgelegtes Wasser bei 0-5° C gleichzeitig so eingetropft, daß sich im Reaktionsgemisch ein pH-Wert von 8,5 einstellt und beide Lösungen in etwa 15 Minuten gleichzeitig eingetragen sind.

Um während des Eintropfens der Lösungen den angegebenen pH-Wert halten zu können, muß zusätzlich 2n Natronlauge in das Reaktionsgemisch eindosiert werden.

Man rührt noch einige Stunden bei 0-5° C unter ständiger pH-Kontrolle nach und läßt dann die Temperatur unter weiterer pH-Kontrolle und Natronlaugezugabe über Nacht auf 20° C ansteigen. Nach Einstellen eines pH-Wertes von 7,5-8,0 wird der Farbstoff mit etwa 150 g Natriumchlorid ausgesalzen, die Fällung abgesaugt und der Filterkuchen mit 500 ml 20 %iger Natriumchlorid-Lösung gewaschen.

Der Filterkuchen wird nach Zusatz von Phosphatpuffern bei 50° C im Vakuumschrank getrocknet. Der erhaltene Farbstoff entspricht der Formel

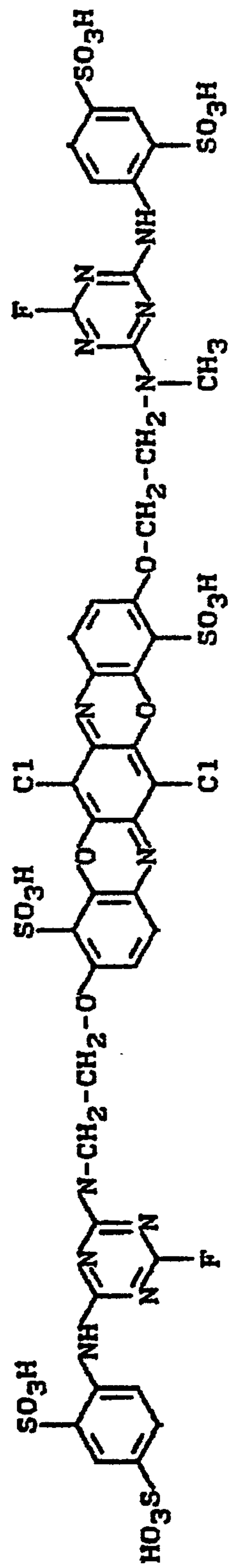

und färbt Cellulosefasern nach den für Reaktivfarbstoffe bekannten Färbeverfahren, in lichtechten, kräftigen, blaustichig roten Tönen.

$\lambda_{max}$ = 545 nm, 512 nm in Wasser

Beispiel 85

50,0 g N-[2-(4-Amino-2-sulfo-phenoxy)-ethyl]-N-methylamin-hydrochlorid (Herstellung s. Beispiel 86) werden in 500 ml Wasser zum pH-Wert 5,5 in Lösung gebracht. Nach Zugabe von 80 ml Isopropanol trägt man 21,8 g 2,3,5,6-Tetrachlorchinon ein und erwärmt das Reaktionsgemisch auf 40° C. Man hält durch Zusatz von 2n Sodalösung dabei den pH-Wert ständig auf 5,5 und rührt zur Beendigung der Kondensation so lange nach, bis der Sodaverbrauch völlig zum Stillstand kommt. Nacht beendeter Umsetzung saugt man die braune Suspension des Kondensationsproduktes ab und wäscht den Filterkuchen mit 500 ml Wasser und 500 ml Aceton. Nach Trocknung erhält man 56,5 g eines Produktes der Formel

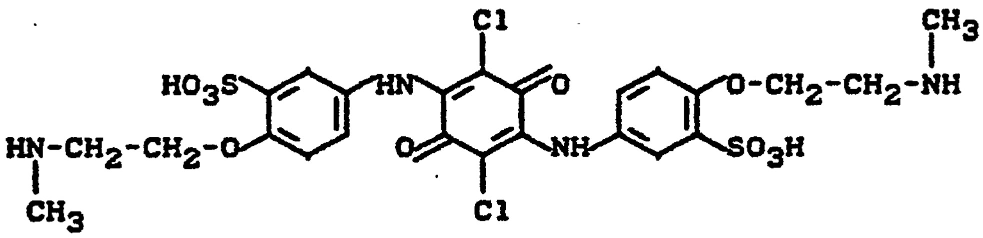

50,0 g des erhaltenen Kondensationsproduktes werden in 200 ml 20 %iges Oleum bei 0-10° C allmählich innerhalb von 3 Stunden eingetragen, man steigert die Temperatur auf 25° C und trägt nun 40,6 g Kaliumperoxodisulfat in etwa 1 Stunde ein, dabei wird die Temperatur auf 30-35° C gehalten. Nach Eintragen des Oxidationsmittels wird das Reaktionsgemische noch 30 Minuten auf 30° C gehalten und anschließend in 2000 g Eis eingerührt. Die entstandene Suspension wird bei 20° C abgesaugt und das Filtergut mit Wasser neutral bzw. sulfatfrei gewaschen.

Beispiel 86

115,3 g N-[2-(4-Aminophenoxy)-ethyl]-N-methyl-benzamid, hergestellt beispielsweise aus 4-Nitro-fluorbenzol und N-(β-Hydroxyethyl)-N-methyl-benzamid in Acetonitril in Gegenwart von Kaliumhydroxid mit nachfolgender katalytischer Reduktion der Nitrogruppe, wie im Beispiel 3 beschrieben, werden bei 15-20° C in eine Mischung von 180 ml 20 %igem Oleum und 60 ml 96 %iger Schwefelsäure in 45 Minuten eingetragen; man steigert die Temperatur auf 25° C und kontrolliert den Fortgang der Sulfonierung chromatographisch. Wenn die Umsetzung nach Rühren über Nacht beendet ist, trägt man die Lösung in 1,5 kg Eis ein. Nach zweistündigem Nachrühren wird die kristallisierte Sulfonsäure abgesaugt und mit 1,0 l kalter 3 %iger Salzsäure sulfatfrei gewaschen. Sie kann bei 60°C im Umluftschrank getrocknet werden und liefert dann 105,8 g Produkt. Zur Verseifung der Benzoylamino-Funktion wird das erhaltene Produkt in 1000 ml 10 %iger Salzsäure mehrere Stunden am Rückfluß gekocht, wobei allmählich Lösen der anfänglichen Suspension eintritt, Nach Kaltrühren wird die ausgefallene Benzoesäure abgesaugt und die Substanz der Formel

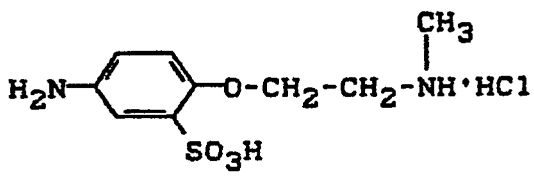

in Form des Hydrochlorides aus dem Filtrat durch Einengen, Fällen mit Aceton, Absaugen und Waschen mit Aceton gewonnen (Ausbeute 75,0 g).
$^{1}$H-NMR ($D_2O$)
δ = 2,83 (3H,s)
δ = 3,58 (2H,t)
δ = 4,53 (2H,t)
δ = 7,32 (1H,d)
δ = 7,58-7,61 (1H,m)
δ = 7,83 (1H,d)

Beispiel 87

8,9 g 3-Aminobenzolsulfonsäure werden in 72 ml Wasser + 51 g Eis suspendiert. Nach Zusatz von 0,1 g Natriumfluorid läßt man zu der Suspension 4,6 ml Cyanurfluorid bei 0-5°C zutropfen und hält den pH-Wert im Reaktionsgemisch mit 2n Sodalösung auf 3,5. Es entsteht eine klare Lösung.

10,0 g Aminoalkoxy-triphendioxazin-Komponente aus Beispiel 85 werden in 155 ml Wasser durch Zugabe von 16 ml 2n Natronlauge bei pH 11,5 gelöst.

Man läßt nun die Lösungen der Reaktivkomponente und der Farbbase in 50 ml vorgelegtes Wasser bei 0-5° C so eintropfen, daß sich im Reaktionsgemisch ein pH-Wert von 8,5-8,7 einstellt und beide Lösungen in etwa 10 Minuten gleichzeitig eingetragen sind. Durch zusätzliche Zugabe von 2n Natronlauge hält man während dieses Vorganges den pH-Wert im Reaktionsgemisch aufrecht.

Die entstandene Suspension wird noch einige Stunden bei 0-5° C gehalten, dann läßt man die Temperatur unter ständiger weiterer pH-Kontrolle auf 20° C ansteigen. Man salzt den erhaltenen Fabstoff durch Salzzugabe aus, saugt ihn ab und wäscht ihn mit 10 %iger NatriumchloridLösung. Nach Anteigen mit Phosphatpuffer von pH 6,5 wird er im Umluftschrank bei 55° C getrocknet.

Der erhaltene Farbstoff entspricht der Formel

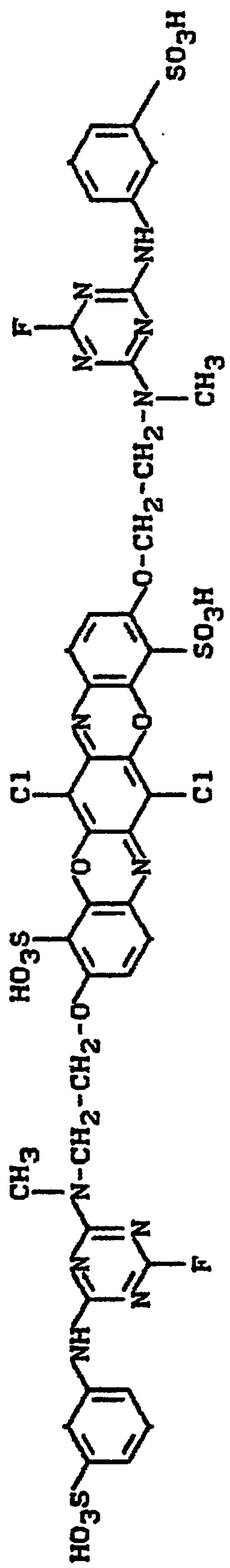

Er färbt Cellulosefasern nach den für Reaktivfarbstoffe bekannten Färbeverfahren in lichtechten, kräftigen, blaustichig roten Tönen.
$\lambda_{max}$ = 548 nm, 515 nm in Wasser

Beispiel 88

98,0 g 3-Benzoylaminopropanol werden nach der im Beispiel 3 beschriebenen Weise in 375 ml Acetonitril mit 68,0 g 4-Nitrofluorbenzol in Gegenwart von 28,0 g pulverisiertem Kaliumhydroxid umgesetzt. Nach Aufarbeitung erhält man 206 g Produkt der Formel

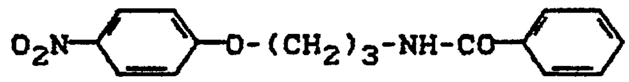

vom Schmelzpunkt 154-155° C.
$^1$H-NMR (DMSO)
δ = 2,03 ppm (2H,m)
δ = 3,43 ppm (2H,m)
δ = 4,17 ppm (2H,t)
δ = 7,10 ppm (2H,d)
δ = 7,38-7,47 ppm (3H,m)
δ = 7,80 ppm (2H,d)
δ = 8,16 ppm (2H,d)
δ = 8,52 ppm (1H,t)

Die katalytische Reduktion mit Wasserstoff bei 50 bar und 50-60° C in Gegenwart von Raney-Nickel in Methanol liefert die entsprechende Aminoverbindung vom Schmelzpunkt 107-108° C.

Sulfonierung der Aminoverbindung in 8 %igem Oleum bei 20° C und anschließende saure Verseifung in der in Beispiel 3 angegebenen Weise ergibt die Verbindung der Formel

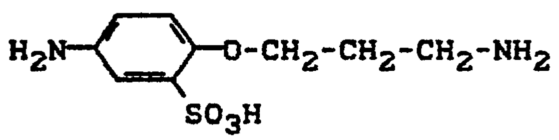

$^1$H-NMR ($D_2O$)
δ = 2,25-2,34 ppm (2H,m)
δ = 3,34 ppm (2H,t)
δ = 4,37 ppm (2H,t)
δ = 7,28 ppm (1H,d)
δ = 7,56-7,61 ppm (1H,m)
δ = 7,82 ppm (1H,d)

72,5 g obiger 5-Amino-2-(ν-aminopropoxy)-benzolsulfonsäure werden in 725 ml Wasser und 120 ml Isopropanol bei pH 5,5 gelöst und bei 40° C mit 31,6 g 2,3,5,6-Tetrachlorbenzochinon bei pH 5,5 kondensiert, das ausgefallene Produkt abgesaugt, mit Wasser und Aceton gewaschen und bei 60° C getrocknet.

Löst man 60,0 g des erhaltenen Bis-arylamino-dichlorchinons in 240 ml 20%igem Oleum und oxydiert anschlie ßend bei 25-30° C durch allmähliches Eintragen von 48,7 g Kaliumperoxodisulfat, rührt 30 Minuten bei 30°C nach und arbeitet dann durch Eingießen in 2,4 1 Eis-Wasser-Mischung, Absaugen des Niederschlages und Waschen des Filterkuchens mit Wasser auf, so erhält man die Triphendioxazin-Komponente des Beispiels 10.

Beispiel 89

15,1 g 2-Aminotoluol-2-sulfonsäure werden in 150 ml Wasser suspendiert. Nach Zusatz von 0,15 g Natriumfluorid läßt man 7,9 ml Cyanurfluorid in 10 Sekunden bei 0-5°C zutropfen und hält mit 2n Lithiumhydroxid-Lösung den pH-Wert auf 3,5.

15 g einer Aminopropoxytriphendioxazinkomponente der Formel

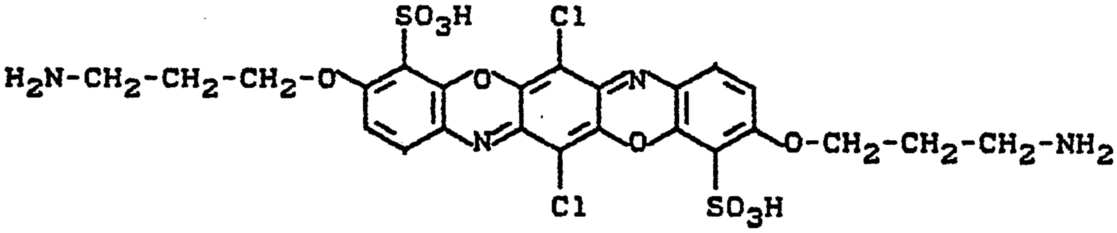

hergestellt nach den Angaben des Beispiels 88, werden in 300 ml Wasser durch Zugabe von 27 ml 2n Lithiumhydroxid-Lösung gelöst.

Man läßt nun beide Lösungen durch gleichzeitiges Eintropfen in Wasser bei 0-5° C und pH 9,0-9,5 reagieren, wobei der pH-Wert im Reaktionsgemisch durch Zugabe von 2n LiOH-Lösung aufrechterhalten wird. Nach mehrstündigem Nachrühren unter pH-Kontrolle läßt man die Temperatur auf 20° C ansteigen und isoliert den Farbstoff durch Aussalzen, Filtration und Waschen mit Natriumchloridlösung.

Der Farbstoff entspricht der Formel

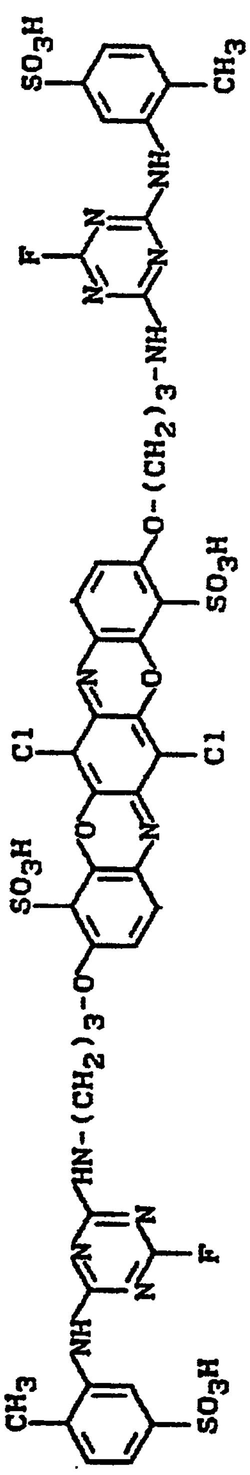

Er färbt Cellulosefasern aus langer Flotte in lichtechten, blaustichig roten Tönen.

**Patentansprüche**

1. Farbstoffe der Formel

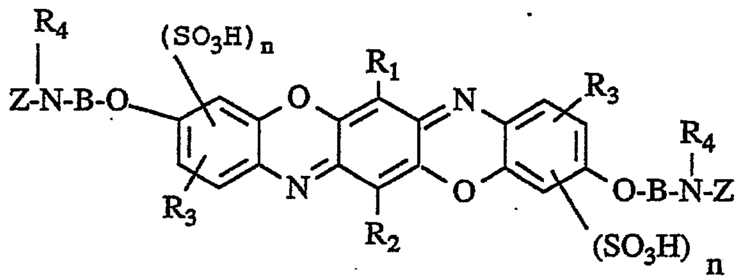

(I)

worin

$R_1$, $R_2$ = H, Cl, Br, ggf. substituiertes $C_1$–$C_4$-Alkyl, ggf. substituiertes $C_{1-4}$-Alkoxy, ggf. substiuiertes Phenoxy,

$R_3$ = H, Cl, Br, ggf. substiuiertes $C_{1-4}$-Alkyl, ggf. substituiertes $C_{1-4}$-Alkoxy,

$R_4$ = H, ggf. substituiertes $C_{1-4}$-Alkyl, ggf. substituiertes Aralkyl, ggf. substituiertes Phenyl,

B = ggf. durch Heteroatome unterbrochenes, ggf. substituiertes aliphatisches Brückenglied mit 2–6 C-Atomen.

Z = H oder faserreaktiver Reste,

n = 0 oder 1.

2. Farbstoffe des Anspruchs 1 der Formel

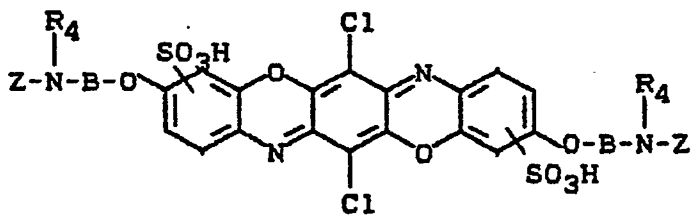

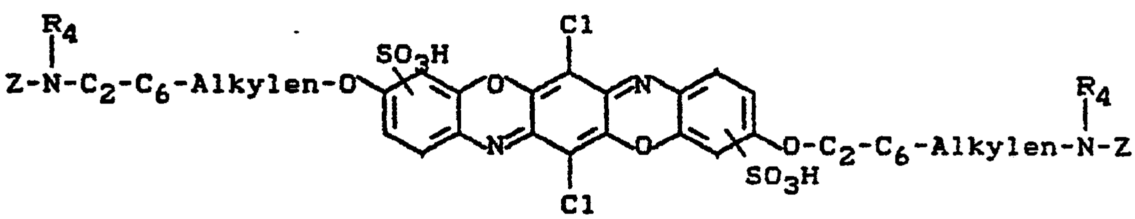

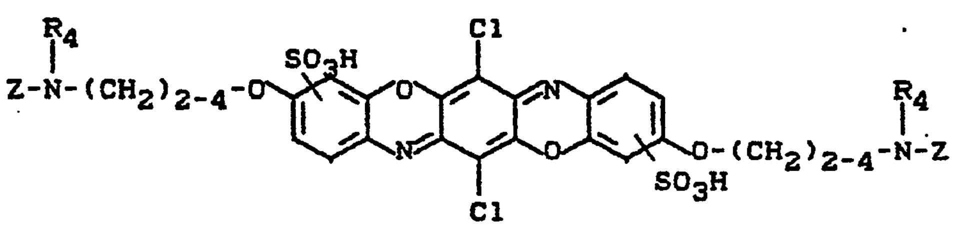

und

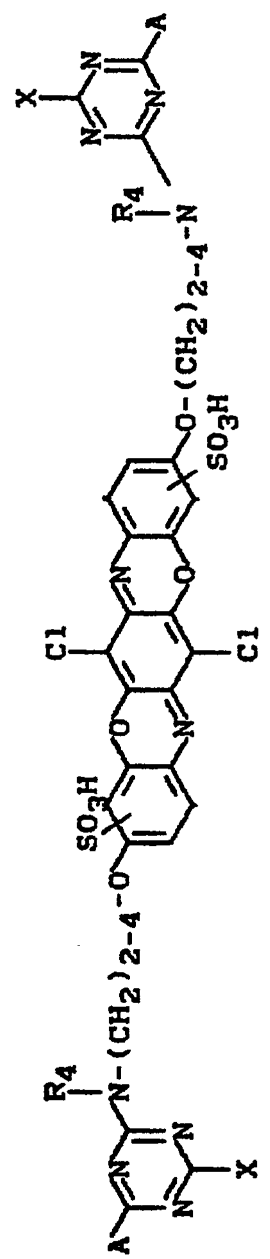

worin X = F oder Cl und
A = Rest der Aminobenzol- oder Aminoaphthalinreihe.

3. Amine der Formel

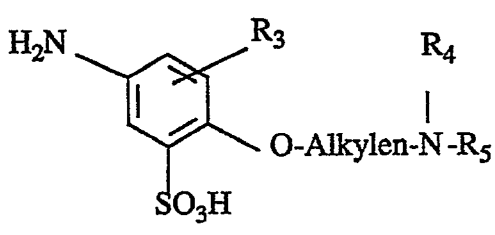

worin
$R_3$ = H, Cl, Br, ggf. substituiertes $C_1$–$C_4$-Alkyl, ggf. substituiertes $C_1$–$C_4$-Alkoxy,
$R_4$ = H, ggf. substituiertes $C_1$–$C_4$-Alkyl, ggf. substituiertes Aralkyl, ggf. substituiertes Phenyl,

$R_5$ = H, Alkylcarbonyl, Phenylcarbonyl oder

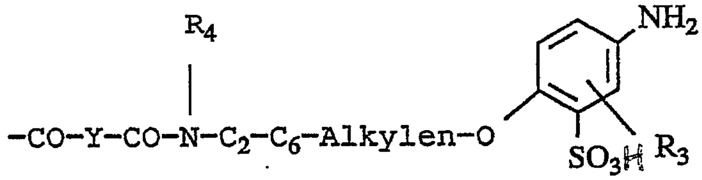

mit Y = direkte Bindung, $C_2$–$C_4$-Alkylen oder 1,3- bzw. 1,4-Phenylen.

4. Amine des Anspruchs 3 mit Alkylen = $C_2$–$C_6$-Alkylen.

5. Verfahren zur Herstellung von Nitroverbindungen der Formel

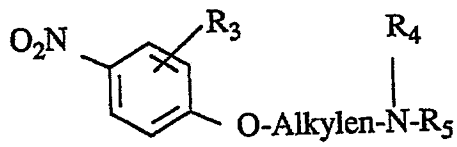

worin
$R_3$ = H, Cl, Br, ggf. substituiertes $C_1$–$C_4$-Alkyl, ggf. substituiertes $C_1$–$C_4$-Alkoxy,
$R_4$ = H, ggf. substituiertes $C_1$–$C_4$-Alkyl, ggf. substituiertes Aralkyl, ggf. substituiertes Phenyl,
$R_5$ = H, Alkylcarbonyl, Phenylcarbonyl oder

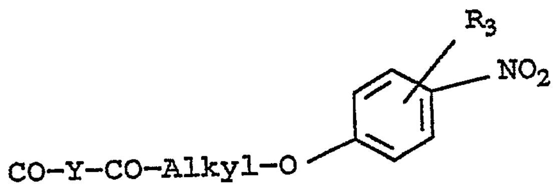

worin
Y = direkte Bindung, $C_2$–$C_4$-Alkylen oder 1,3- bzw. 1,4-Phenylen oder

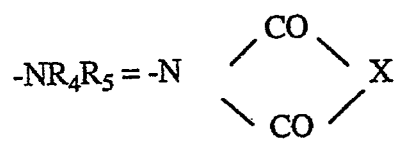

mit X = $C_2$–$C_4$-Alkylen oder 1,2-Phenylen, dadurch gekennzeichnet, daß man Nitrohalogenbenzole der Formel

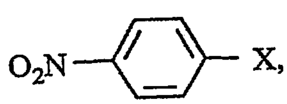

worin
X = F, Cl, Br
in Gegenwart starker Basen sowie gegebenenfalls von Transferkatalysatoren mit Acylaminoalkanolen der Formel

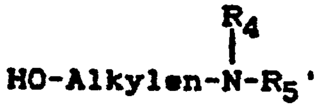

umsetzt, worin
$R_5'$ = Alkylcarbonyl, Phenylcarbonyl oder

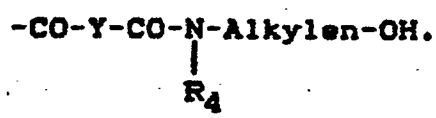

6. Verfahren nach Anspruch 5, dadurch gekennzeichnet, daß die Umsetzung in dipolaren aprotischen Lösungsmitteln oder in mit Wasser nicht mischbaren organischen Lösungsmiteln erfolgt.

7. Verwendung der Farbstoffe der Ansprüche 1–2 zum Färben und Bedrucken von hydroxyl- und amidgruppenhaltigen Materialien.

## Claims

1. Dyestuffs of the formula

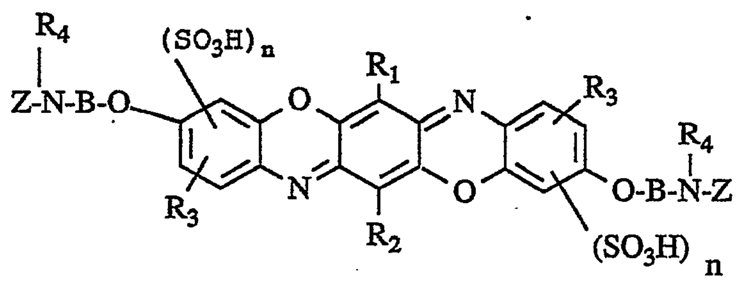

(I)

in which
$R_1$, $R_2$ = H, Cl, Br, optionally substituted $C_1$–$C_4$-alkyl, optionally substituted $C_{1-4}$-alkoxy or optionally substituted phenoxy,
$R_3$ = H, Cl, Br, optionally substituted $C_{1-4}$-alkyl or optionally substituted $C_{1-4}$-alkoxy,
$R_4$ = H, optionally substituted $C_{1-4}$-alkyl, otpionally substituted aralkyl or optionally substituted phenyl,
B = optionally substituted aliphatic bridge member having 2–6 C atoms, which is optionally interrupted by heteroatoms,
Z = H or fibre-reactive radical,
n = 0 or 1.

2. Dyestuffs of Claim 1 of the formula

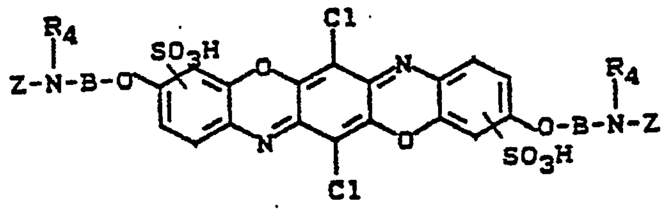

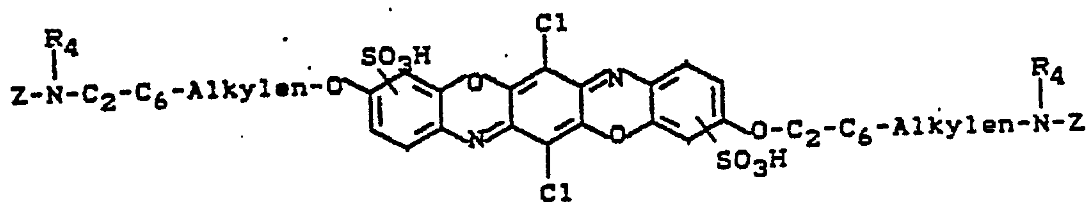

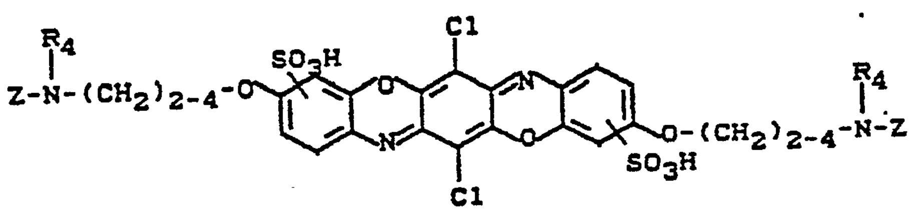

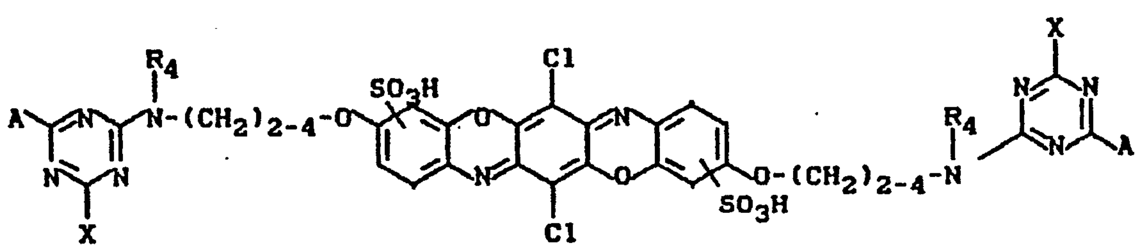

in which
X = F or Cl and
A = a radical of the aminobenzene or aminonaphthalene series.

3. Amines of the formula

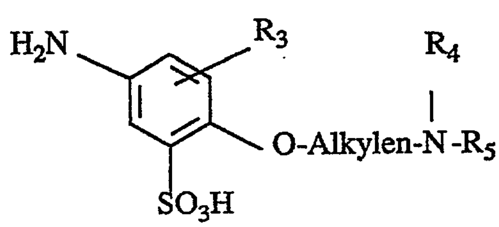

in which
$R_3$ = H, Cl, Br, optionally substituted $C_1$–$C_4$-alkyl or optionally substituted $C_1$–$C_4$-alkoxy,
$R_4$ = H, optionally substituted $C_1$–$C_4$-alkyl, optionally substituted aralkyl or optionally substituted phenyl.
$R_5$ = H, alkylcarbonyl, phenylcarbonyl or

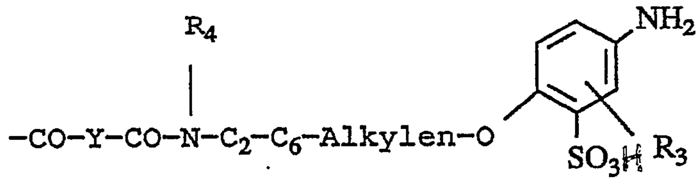

where Y = direct bond, $C_2$–$C_4$-alkylene or 1,3- or 1,4-phenylene.

4. Amines of Claim 3 where alkylene = $C_2$–$C_6$-alkylene.

5. Process for preparing nitro compounds of the formula

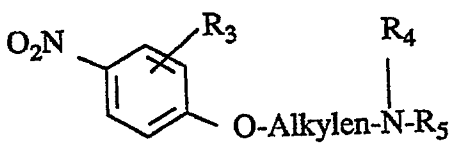

in which

$R_3$ = H, Cl, Br, optionally substituted $C_1$–$C_4$-alkyl or optionally substituted $C_1$–$C_4$-alkoxy,

$R_4$ = H, optionally substituted $C_1$–$C_4$-alkyl, optionally substituted aralkyl or optionally substituted phenyl,

$R_5$ = H, alkylcarbonyl, phenylcarbonyl or

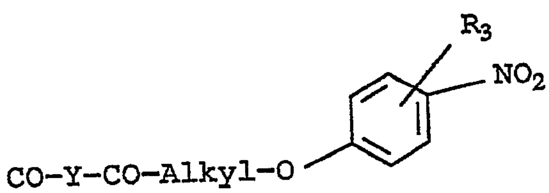

in which

Y = direct bond, $C_2$–$C_4$-alkylene or 1,3- or 1,4-phenylene or

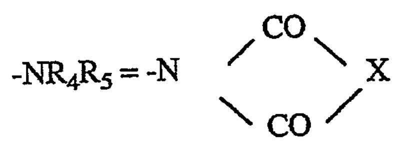

where X = $C_2$–$C_4$-alkylene or 1,2-phenylene, characterized in that nitrohalobenzenes of the formula

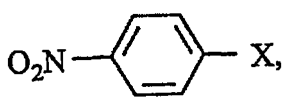

in which X = F, Cl or Br are reacted in the presence of strong bases and in the presence or absence of transfer catalysts with acylaminoalkanols of the formula

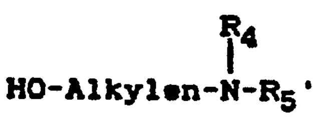

in which

$R_5$ = alkylcarbonyl, phenylcarbonyl or

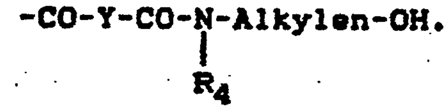

6. Process according to Claim 5, characterized in that the reaction takes place in dipolar aprotic solvents or in water-immiscible organic solvents.

7. Use of the dyestuffs of Claims 1–2 for the dyeing and printing of hydroxyl- and amido-containing materials.

**Revendications**

1. Colorants de formule

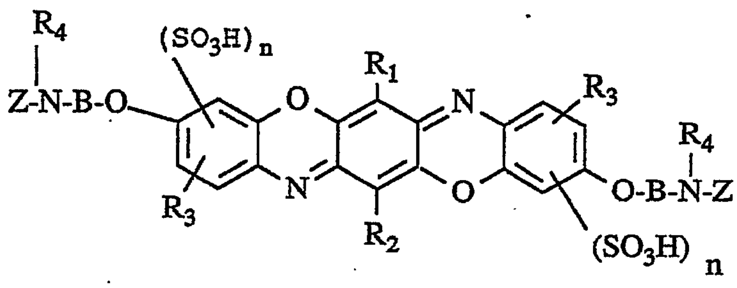

(I)

dans laquelle
$R_1$, $R_2$ = H, Cl, Br, alkyle en $C_1$–$C_4$ éventuellement substitué, alcoxy en $C_1$–$C_4$ éventuellement substitué, $R_3$= H, Cl, Br, alkyle en $C_1$–$C_4$ éventuellement substitué, alcoxy en $C_1$–$C_4$ éventuellement substitué, phénoxy éventuellement substitué,
$R_4$ = H, alkyle en $C_1$–$C_4$ éventuellement substitué, aralkyle éventuellement substitué, phényle éventuellement substitué, B = pont aliphatique en $C_2$–$C_6$ éventuellement interrompu par des hétéroatomes et éventuellement substitué, Z = H ou groupe réactif avec les fibres, n = 0 ou 1.

2. Colorants selon la revendication 1, de formules

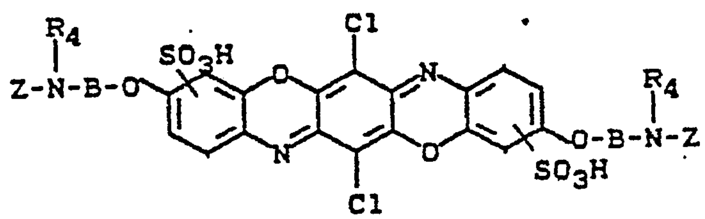

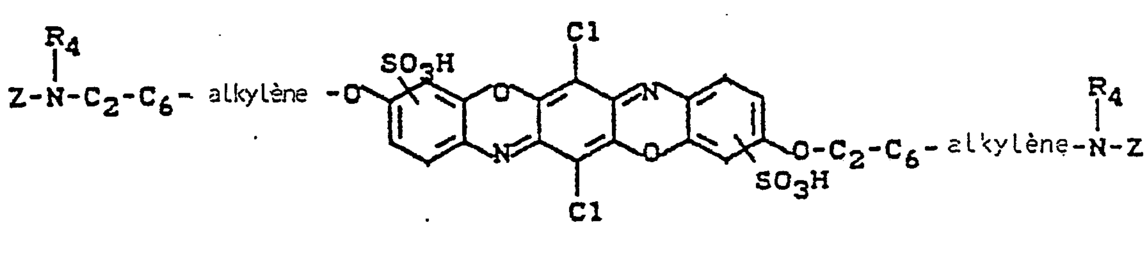

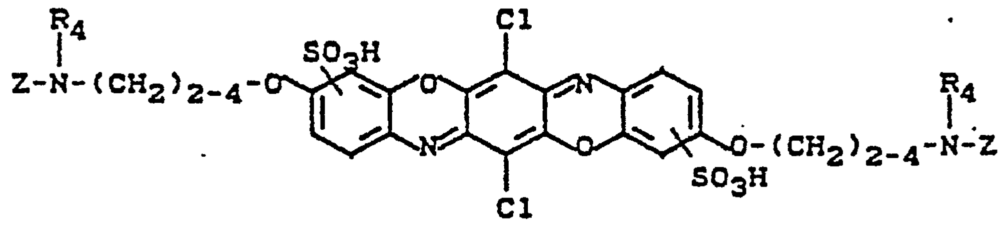

et

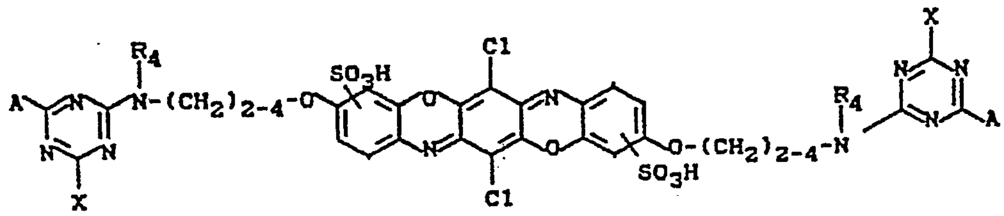

dans lesquelles X = F ou Cl et
A = radical de la série de l'aminobenzène ou de l'aminonaphtalène.

3. Amines de formule

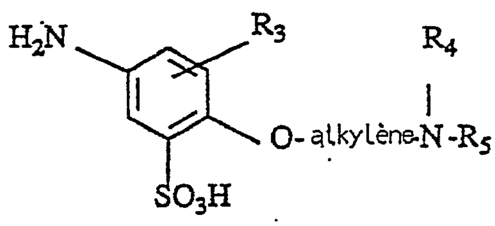

dans laquelle
$R_3$ = H, Cl, Br, alkyle en $C_1$–$C_4$ éventuellement substitué,
$R_4$ = H, alkyle en $C_1$–$C_4$ éventuellement substitué, aralkyle éventuellement substitué, phényle éventuellement substitué, $R_5$ = H, alkylcarbonyle, phénylcarbonyle ou

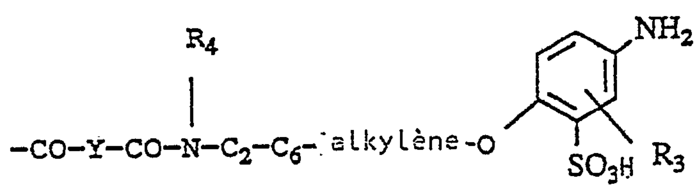

avec Y = liaison directe, alkylène en $C_2$–$C_4$ ou 1,3- ou 1,4-phénylène.

4. Amines selon la revendication 3, avec alkylène = alkylène en $C_2$–$C_6$.

5. Procédé de préparation des dérivés nitrés de formule

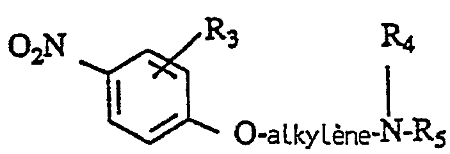

dans laquelle
$R_3$ = H, Cl, Br, alkyle en $C_1$–$C_4$ éventuellement substitué, alcoxy en $C_{1-4}$ éventuellement substitué,
$R_4$ = H, alkyle en $C_1$–$C_4$ éventuellement substitué, aralkyle éventuellement substitué, phényle éventuellement substitué,
$R_5$ = H, alkylcarbonyle, phénylcarbonyle ou

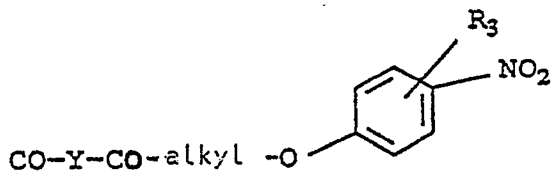

dans laquelle
Y = liaison directe, alkylène en $C_2$–$C_4$ ou 1,3- ou 1,4-phénylène ou

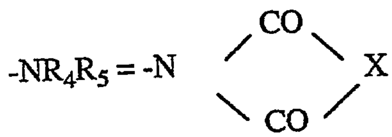

avec X = alkylène en $C_2$–$C_4$ ou 1,2-phénylène, caractérisé en ce que l'on fait réagir des nitrohalogénobenzènes de formule

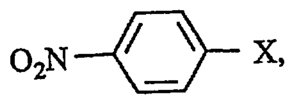

dans laquelle
X = F, Cl, Br en présence de bases fortes et le cas échéant en présence de catalyseurs à transfert de phase, avec des acylaminoalcanols de formule

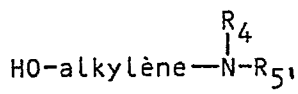

dans laquelle
$R_5$, = alkylcarbonyle, phénylcarbonyle, ou

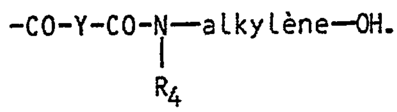

6. Procédé selon la revendication 5, caractérisé en ce que la réaction est effectuée dans des solvants dipolaires aprotoniques ou dans des solvants organiques non miscibles à l'eau.

7. Utilisation des colorants des revendications 1–2 pour la teinture et l'impression de matières contenant des groupes hydroxy et amide.